# EUROPÄISCHE PATENTSCHRIFT

(11) **EP 0 568 006 B1**
(45) Veröffentlichungstag und Bekanntmachung des Hinweises auf die Patenterteilung: **28.05.1997**
(21) Anmeldenummer: 93106807.6
(22) Anmeldetag: 27.04.1993
(51) Int. Cl.: F16F 9/02, F16B 7/10

(54) **Teleskopische Positioniereinrichtung**
Telescopic positioning device
Dispositif téléscopique pour le positionnement

(30) Priorität: 27.04.1992 DE 4213818
(43) Veröffentlichungstag der Anmeldung: 03.11.1993
(73) Patentinhaber: Stabilus GmbH, D-56070 Koblenz (DE)
(72) Erfinder: Maury, Horst, W-5401 St. Sebastian (DE); Morgen, Helmut, W-5441 Mannebach (DE)
(74) Vertreter: Weickmann, Heinrich, Dipl.-Ing.

(56) Entgegenhaltungen:
- EP-A- 0 432 767
- US-A- 4 318 228

## Beschreibung

Die Erfindung betrifft eine teleskopische Positioniereinrichtung zum Einbau zwischen zwei Konstruktionsteilen einer übergeordneten Konstruktion mit einer Achse, einer Gasfeder und einem auf dem Zylinder der Gasfeder in Achsrichtung verschiebbaren Mantelteil, wobei das Mantelteil ein Ausschubende besitzt, an dem Mantelteil ein Verbindungselement zur Verbindung mit einem Konstruktionsteil der übergeordneten Konstruktion angebracht ist, eine Kolbenstange der Gasfeder aus dem Ausschubende des Mantelteils herausgeführt ist und an dem äußeren Endbereich der Kolbenstange ein weiteres Verbindungselement zur Verbindung mit einem weiteren Konstruktionsteil der übergeordneten Konstruktion angebracht ist, wobei weiter an dem Zylinder in einem kolbenstangenfernen Abschnitt ein Riegelelement zum Eingriff in mindestens eine Durchbrechung des Mantelteils vorgesehen ist, so daß bei Eingriff des Riegelelements in die Durchbrechung eine Axialverschiebung von Zylinder und Mantelteil im wesentlichen blockiert ist, wobei weiter das Riegelelement im wesentlichen radial von der Achse weg in Richtung auf eine Verriegelungsstellung vorgespannt ist, so daß bei Einstellung des Riegelelements in Radialflucht zu der Durchbrechung das Riegelelement zwangsläufig in seine Verriegelungsstellung und damit in die Durchbrechung eintritt, und wobei am radial äußeren Ende des Riegelelements eine für äußere Radialkrafteinwirkung, insbesondere Fingereinwirkung, zugängliche Entriegelungsfläche vorgesehen ist, welche eine Bewegung des Riegelelements nach radial einwärts auszuführen gestattet, so daß eine Blockierung der Axialverschiebung zwischen dem Zylinder und dem Mantelteil gelöst wird und eine Schleiffläche des Riegelelements nach Einleitung einer Axialverschiebung in Schleifeingriff mit einer Schleifbahn des Mantelteils gelangt.

Eine solche teleskopische Positioniereinrichtung kann beispielsweise Anwendung finden zur Öffnung und Positionierung eines Kofferraumdeckels oder einer Motorhaube bei einem Kraftfahrzeug. Es ist seit langem bekannt, die Öffnungsbewegung einer Motorhaube oder eines Kofferraumdeckels durch eine oder mehrere Gasfedern zu unterstützen. Dabei ist die Gasfeder in der Regel so ausgelegt, daß sie ggf. nach einem handunterstützten Öffnungsvorgang den Kofferraumdeckel bzw. die Motorhaube durch ihre von einer Druckgasfüllung erzeugten Ausschubkraft in eine Öffnungsstellung bringt und in dieser Öffnungsstellung auch hält, wobei dann zum Wiederschließen des Kofferraumdeckels bzw. der Motorhaube eine relativ kleine Kraft ausgeübt werden muß, welche,das Schwerkraftmoment unterstützend, ausreicht, die Ausschubkraft der Gasfeder zu überwinden. Die Öffnungsweite der Motorhaube bzw. des Kofferraumdeckels ist durch den Hub der Gasfeder bestimmt. Man kann in der Regel Gasfedern einbauen, deren Hub ausreicht, um das jeweilige Karosserieteil in eine für den Normalbetrieb ausreichende Öffnungsstellung zu bringen. Es können aber Ausnahmesituationen auftreten, in denen eine größere Öffnungsweite erwünscht ist, beispielsweise dann, wenn in einem Kofferraum eines PKWs oder eines Kombifahrzeugs große sperrige Gegenstände eingebracht werden sollen, oder wenn in dem Motorraum eines Fahrzeugs größere Reparaturen vorgenommen werden sollen. Um auch diesen Situationen gerecht zu werden, ist es aus der deutschen Offenlegungsschrift P 39 40 916.3 und aus der europäischen Offenlegungsschrift EP 0 432 767A1 bekannt, auf den Zylinder der Gasfeder ein Mantelteil aufzuschieben, welches gegenüber dem Zylinder axial verschiebbar ist. Das Mantelteil kann dabei eine Länge etwa entsprechend der Länge des Gasfederzylinders besitzen, so daß ein erheblicher Teleskopweg des Mantelteils gegenüber dem Zylinder zur Verfügung steht. Soll nun eine Öffnungsweite des jeweiligen Karossierieteils eingestellt werden, welche über die normalerweise durch Ausfahren der Gasfeder erzielbare Öffnungsweite hinausgeht, so kann das Mantelteil gegenüber dem Zylinder verschoben werden. Um eine so abgewandelte Gasfeder an dem Fahrzeugrahmen einerseits und dem zu verschwenkenden Karosserieteil andererseits anbringen zu können, wird das eine Anschlußelement, wie bei Gasfedern üblich, nach wie vor an dem freien Ende der Gasfederkolbenstange angebracht, während das andere Anschlußelement an dem Mantelteil angebracht wird, beispielsweise an dessen dem Boden der Gasfeder zugehörigen Ende.

Um nun eine durch Austeleskopieren des Zylinders aus dem Mantelteil, erreichbare Öffnungsstellung festlegen zu können, sieht man an dem Zylinder ein Riegelelement vor, welches in eine oder mehrere Durchbrechungen des Mantelteils eingreifen kann. Dieses Riegelelement ist nach radial auswärts vorgespannt und schnappt zwangsläufig in eine Durchbrechung des Mantelteils ein, wenn die durch die Lage der Durchbrechung und des Riegelelements definierte Öffnungsstellung erreicht ist. Dabei ist es üblich, das Riegelelement an dem bodenseitigen Endbereich des Zylinders, anzubringen. Regelmäßig sind nun mindestens zwei Durchbrechungen in dem Mantelteil erforderlich, um das Mantelteil in zwei Positionen gegenüber dem Zylinder einstellen zu können. Eine erste Position entspricht dabei derjenigen Relativeinstellung von Mantelteil und Zylinder, in welcher der Zylinder vollständig in den Mantelteil eingefahren ist. Die in dieser Relativstellung von Mantelteil und Zylinder erreichte Öffnungsweite eines Karosserieteils entspricht derjenigen Öffnungsweite, welche sich durch die Ausschubkraft der Gasfeder zwangsläufig einstellen läßt. Da aber nun das eine Anschlußelement zur Verbindung mit dem Fahrzeugrahmen bzw. dem beweglichen Karosserieteil, nicht mehr fest am Kernteil angebracht ist, sondern an dem auf dem Kernteil verschiebbaren Mantelteil, bedarf es auch in der erwähnten Stellung einer Verriegelung des Mantelteils gegenüber dem Zylinder, weil anderenfalls die Gefahr bestehen könnte, daß etwa im Falle eines Windstoßes auf den in normaler Öffnungsstellung befindlichen Karosserieteil dieser unter Austeleskopieren des Zylinders aus dem Mantelteil unbeschränkt angehoben werden könnte mit der Folge, daß es gegen einen anderen Bereich der Fahrzeugkonstruktion stößt und dort Beschädigungen hervorruft oder daß die Teleskopführung zwischen dem Mantelteil und dem Zylinder verlorengeht und danach das Karosserieteil in seine Schließstellung unter Personengefährdung zurückfällt.

Einer weiteren Verriegelung bedarf es in einem Längeneinstellungszustand von Mantelteil und Zylinder, welcher dem für Ausnahmesituationen einzustellenden Öffnungszustand des Karosserieteils entspricht.

Demgemäß ist es aus der deutschen Offenlegungsschrift 39 40 916 und aus der korrespondierenden europäischen Offenlegungsschrift bekannt, das Mantelteil gegenüber dem Zylinder zum einen in der voll einteleskopierten Stellung zu verriegeln und zum anderen in einer teilweise austeleskopierten Stellung, in welcher noch eine ausreichende Führungslänge zwischen dem Zylinder und dem Mantelteil besteht, ebenfalls zu verriegeln.

All dies ist aus den obengenannten Schriften bekannt.

Bei den bekannten Lösungen wurde aber nun folgendes Problem erstmalig festgestellt: Das Entriegeln der zwischen Mantelteil und Zylinder bestehenden Verriegelung erfolgt in aller Regel durch Fingerdruck auf das durch die Durchbrechung des Mantelrohrs hindurchragende Riegelelement. Die Umstellung von normaler Öffnungsstellung in Extremöffnungsstellung und zurück erfordert zwei Entriegelungsvorgänge. Diese Entriegelungsvorgänge müssen vom Kraftfahrzeughalter, häufig einer Frau, durch Fingerdruck auf das Riegelelement durchgeführt werden. Die zur Entriegelung aufzubringende äußere Krafteinwirkung auf das Riegelelement soll also relativ mühelos sein. Leicht zu lösende Verriegelung bedeutet aber auch eine Gefahr, insbesondere auch unter Berücksichtigung des Umstands, daß der verfügbare Hub des Riegelelements durch den relativ geringen Lichtraum innerhalb eines schlanken Mantelrohrs beschränkt ist und das Riegelelement deshalb nicht beliebig weit nach radial außen über das Mantelrohr im Verriegelungszustand überstehen kann. Ein solches zu weites Überstehen des Riegelelements in der Verriegelungsstellung wäre auch deshalb unerwünscht, weil damit eine Berührungsgefahr mit im Umgebungsbereich befindlichen Personen oder Gegenständen aufkommen würde, die zu einem unbeabsichtigten Lösen führen könnte. Dies bedeutet, daß zum Lösen des Riegelelements also nur ein beschränkter Hubweg zur Verfügung steht, und um bei einem solchen beschränkten Hubweg einerseits ein leichtgängiges Lösen der Verriegelung, andererseits aber ein gefahrenausschließendes, sicheres Verriegeln zu gewährleisten, bedarf es erheblicher Anstrengungen.

Zur Erläuterung der Problemstellung sei beispielsweise an folgende Situation erinnert: Das Mantelteil wird in der austeleskopierten Position gegenüber dem Zylinder durch Eingriff des Riegelelements in eine entsprechende Durchbrechung des Mantelteils verriegelt. Es ist dies die Stellung vergrößerter Öffnungsweite für Sondersituationen im Falle eines Kraftfahrzeugkarosserieteils, also einer Heckklappe oder eines Kofferraumdeckels. Von dieser Position muß nach einiger Zeit, aber häufig im Laufe der Lebensdauer eines Fahrzeugs, wieder in die normale Öffnungsweite übergegangen werden. Dabei ist es unerwünscht, wenn zu große Lösekräfte auf das Riegelelement erforderlich sind. Man will deshalb die zur Entriegelung für nachfolgendes Einteleskopieren des Zylinders in das Mantelteil erforderliche Lösekraft auf das Riegelelement verhältnismäßig klein haben. Man kann dies auch relativ gefahrlos tun, weil nach einmal erreichter Einstellung des Karosserieteils auf seine Extremöffnungsstellung das Verriegelungselement durch die vom Schwerkraftmoment des Karosserieteils herrührende Relativkraft zwischen Zylinder und Mantelteil zusätzlich in seiner Verriegelungsstellung gesichert wird, und weil mit relativ konstanter Belastung des Riegelelements gerechnet werden kann.

Nun denke man aber auch an folgende Situation: Der Fahrzeughalter oder eine mit Reparaturarbeiten beauftragte Person ist gerade dabei, das Karosserieteil von seiner normalen Öffnungsstellung in eine Extremöffnungsstellung überzuführen, und in diesem Augenblick tritt ein Windstoß auf, welcher das Karosserieteil in Richtung weitergehender Öffnung beschleunigt. Dann besteht die große Gefahr, daß eine relativ leichtgängige Verriegelung beim Überfahren des Riegelelements über die für die Extremöffnung vorgesehene Durchbrechung im Mantelteil nicht rechtzeitig einschnappt, sondern über diese Durchbrechung hinweggleitet. Diese Gefahr ist umso größer, als dem aus dem Riegelelement und einer Vorspannfeder bestehenden Schwingungssystem eine gewisse Zeitkonstante zugeordnet ist, die jedenfalls bei einer im Hinblick auf leichtgängiges Entriegeln schwachen Federkraft zu groß sein kann, um beim Ausfahren des Zylinders aus dem Mantelteil mit großer Geschwindigkeit eine rechtzeitige Verriegelung herbeizuführen, um ein Überfahren des Riegelelements über die Durchbrechung hinweg zu verhindern.

Aus den vorstehenden Überlegungen ergibt sich die Aufgabe, bei einer Positioniereinrichtung der eingangs bezeichneten Art einerseits den Lösekraftaufwand am Riegelelement gering zu halten, andererseits aber dennoch für hohe Sicherheit der Verriegelung zu sorgen.

Zur Lösung dieser Aufgabe wird nach einer ersten Alternative vorgeschlagen, daß die Größe des zur Lösung der Blockierung notwendigen, durch äußere Radialkrafteinwirkung auf die Entriegelungsfläche herbeizuführenden Radialwegs des Riegelelements von der Relativverschieberichtung einer nachfolgend beabsichtigten Axialverschiebung zwischen dem Zylinder und dem Mantelteil abhängig unterschiedlich ist, wobei einer ersten Relativverschieberichtung mit geringerem Gefahrenpotential ein kleinerer Radialweg und einer zweiten Relativverschieberichtung mit größerem Gefahrenpotential ein größerer Radialweg entspricht.

Nach einer zweiten Alternative wird vorgeschlagen, daß im Umgebungsbereich von Durchbrechungen an der Außenseite des Mantelteils Anschlagflächen für ein auf die Entriegelungsfläche im wesentlichen radial einwirkendes Löseorgan, insbesondere einen Finger, vorgesehen sind, welche für verschiedene Durchbrechungen unterschiedlichen Radialabstand von der Achse besitzen.

Nach einer dritten Alternative wird vorgeschlagen, daß das Riegelelement in seiner Verriegelungsstellung ein Axialspiel gegenüber der Durchbrechung besitzt und daß eine Radialeinwärtsbewegung des Riegelelements dann gesperrt ist, wenn dieses Axialspiel durch Axialverschiebung in einer Relativverschieberichtung wenigstens teilweise aufgebraucht ist.

Es ist möglich, die verschiedenen Alternativen auch gemeinsam zur Anwendung zu bringen.

Bereits dadurch, daß entsprechend der ersten Alternative zur Lösung der Verriegelung in der ersten Relativverschieberichtung ein kleinerer und zur Lösung der Verriegelung für die andere Relativverschieberichtung ein größerer Radialweg des Riegelelements durch äußere Einwirkung zu veranlassen ist, kann den vorstehend geschilderten Situationen Rechnung getragen werden.

Eine zusätzliche Verbesserung läßt sich bei der ersten Alternative dadurch erreichen, daß die Radialbewegung des Riegelelements durch äußere Radialkrafteinwirkung längs eines der Differenz zwischen dem größeren und dem kleineren Radialweg entsprechenden Restwegs erschwert ist.

Grundsätzlich kann dabei die Erschwerung der Radialbewegung längs des Restwegs bereits durch eine Progression der Federkraft einer auf das Riegelelement wirkenden Vorspanneinrichtung erreicht werden.

Die Anschlagflächen nach der zweiten Alternative können beispielsweise durch Fingermulden gebildet sein, in denen ein auf das Riegelelement einwirkender Finger einer das Riegelelement betätigenden Person anstößt, wenn er das Riegelelement radial einwärts drückt. Diese Fingermulden können am Mantelteil in der Umgebung der jeweiligen Durchbrechung angeordnet werden, etwa in der Weise, daß der Durchbrechungsrand zwischen den beiden axialen Enden der Durchbrechung auf der Außenseite des Mantelrohrs versenkt angeordnet wird.

Die Unterschiedlichkeit des notwendigen Radialwegs des Riegelelements für nachfolgende Axialverschiebung in unterschiedlichen Relativverschieberichtungen entsprechend der ersten Alternative kann auf verschiedene Weise erreicht werden. So wäre es grundsätzlich möglich, diese Unterschiedlichkeit des Radialwegs durch unterschiedlichen radialen Abstand der Schleifbahnen beiderseits einer Durchbrechung von der Achse zu erzielen. Nach einer bevorzugten Ausführungsform ist jedoch vorgesehen, daß die Unterschiedlichkeit des notwendigen Radialwegs des Riegelelements für nachfolgende Axialverschiebung in unterschiedlichen Relativverschieberichtungen durch Ausbildung von zusammenwirkenden, in axialer Richtung einander gegenüberstehenden Nockenmitteln an dem Riegelelement und einem Durchbrechungsrand verursacht ist, welche bei Beginn einer Axialverschiebung in mindestens einer Relativverschieberichtung eine zusätzliche Radialbewegung des Riegelelements nach radial einwärts über eine durch äußere Radialkrafteinwirkung auf die Entriegelungsfläche erreichte Stellung hinaus bewirken. Grundsätzlich können an beiden Enden einer Durchbrechung Nockenmittel vorgesehen sein, wobei die Unterschiedlichkeit des notwendigen Radialwegs dann durch unterschiedliche Form der Nockenmittel erzielt werden kann. Bevorzugt ist allerdings eine Lösung dergestalt, daß Nockenmittel nur in einem axialen Endbereich des Riegelelements und in dem zugehörigen axialen Endbereich des Durchbrechungsrands vorgesehen sind.

Die Entriegelungsfläche bietet sich gleichzeitig zur Verwendung als Schleiffläche an. Insbesondere unter dieser Voraussetzung wird empfohlen, daß riegelelementseitige Nockenmittel durch Profilierung einer in Achsrichtung verlaufenden Scheitellinie der Entriegelungsfläche gebildet sind und daß durchbrechungsrandseitige Nockenmittel an einem radial inneren Endbereich des Durchbrechungsrands gebildet sind.

Eine bevorzugte Ausführungsform, die sich auch im Hinblick auf eine einfache Gestaltung des Riegel elements vorteilhaft auswirkt, besteht darin, daß die in Achsrichtung verlaufende Scheitellinie einen im wesentlichen achsparallelen Abschnitt aufweist, welcher einendig in eine im wesentlichen radiale Anschlagkante zum Zusammenwirken mit einem axialen Endbereich des Durchbrechungsrands übergeht und anderendig in eine gegen die Achse spitzwinkelig geneigte Flanke zum nockenartigen Zusammenwirken mit einem gegenüberliegenden axialen Endbereich des Durchbrechungsrands übergeht, wobei im Bereich des achsparallelen Abschnitts die Schleiffläche ausgebildet ist.

Die dritte Alternative liefert auch eine vorteilhafte Lösung für den Fall, daß in beiden Relativverschieberichtungen eine absolut sichere Verriegelung gewährleistet werden soll, dennoch aber dafür gesorgt werden soll, daß die Lösung der Verriegelung bei Verschiebung in der einen Relativverschieberichtung relativ leichter möglich sein soll als bei Lösung der Verriegelung im Hinblick auf die entgegengesetzte Relativverschieberichtung.

Man denke nun wieder an die Situation, daß eine Motorhaube oder eine Heckklappe eines Kraftfahrzeugs in einer Extremöffnungsstellung sich befindet dadurch, daß der Zylinder aus dem Mantelteil austeleskopiert und in dieser austeleskopierten Stellung verriegelt ist. Wenn man nun in die Normalöffnungsstellung zurückkehren will, so ist dies nicht ohne weiteres möglich, weil die Radialeinwärtsbewegung des Riegelelements gesperrt ist. Legt man aber Hand an an dem Karosserieteil, indem man dieses um wenige Millimeter anhebt, wozu keine große Anstrengung notwendig ist, so wird das Axialspiel zwischen Riegelelement und Durchbrechung in der zweiten Relativverschieberichtung aufgebraucht, und es ist dann möglich, mit einem verhältnismäßig geringen Radialweg, also leichtgängig, das Riegelelement für eine nachfolgende Axialverschiebung in der ersten Relativverschieberichtung zu lösen. Damit ist eine unbeabsichtigte Lösung der Verriegelung für eine nachfolgende Axialverschiebung in der ersten Relativverschieberichtung zwangsläufig ausgeschlossen, während eine Lösung der Verriegelung für eine nachfolgende Axialverschiebung in der zweiten Relativverschieberichtung dadurch erschwert ist, daß hierfür ein größerer Radialweg an das Riegelelement durch Fingerdruck von außen erteilt werden muß.

Die Radialeinwärtsbewegung des Riegelelements kann entsprechend der dritten Alternative insbesondere durch Sperrflächen an dem Riegelelement und an dem Durchbrechungsrand gesperrt werden, etwa in der Weise,daß eine riegelelementseitige Sperrfläche von einer radial einwärts der Entriegelungsfläche gelegenen Hinterschneidung des Riegelelements und eine durchbrechungsrandseitige Sperrfläche von einem in axialer Richtung in die Durchbrechung hineinragenden Sperrvorsprung des Durchbrechungsrands gebildet sind.

Wenn nun zwei axial beabstandete Durchbrechungen in dem Mantelteil vorhanden sind, so kann die folgende Lösung in Betracht gezogen werden:

Bei Eingriff des Riegelelements in eine erste Durchbrechung ist zur nachfolgenden Ausführung einer Axialverschiebung in der ersten Relativverschieberichtung, welche das Riegelelement an die zweite Durchbrechung annähert, ein kleinerer Radialweg des Riegelelements durch äußere Radialkrafteinwirkung erforderlich; bei Eingriff des Riegel elements in diese erste Durchbrechung ist zur nachfolgenden Axialverschiebung in der zweiten Relativverschieberichtung ein größerer Radialweg des Riegelelements durch äußere Radialkrafteinwirkung erforderlich; bei Eingriff des Riegelelements in die zweite Durchbrechung zur nachfolgenden Axialverschiebung in der zweiten Relativverschieberichtung ist ein größerer Radialweg des Riegelelements durch äußere Radialkrafteinwirkung erforderlich; die Radialbewegung des Riegelelements durch äußere Radialkrafteinwirkung längs einer der Differenz zwischen einem kleineren Radialweg und einem größeren Radialweg entsprechenden Restweg ist bei Eingriff des Riegelelements in die zweite Durchbrechung weniger erschwert als bei Eingriff des Riegelelements in die erste Durchbrechung.

Dieser Vorschlag bedeutet angewandt auf das Ausführungsbeispiel einer Gasfeder mit einem Zylinder und einem über diesen Zylinder teleskopisch übergestülpten Mantelteil folgendes: Wenn der Zylinder gegenüber dem Mantelteil austeleskopiert ist, greift das Riegelelement in die erste Durchbrechung ein. Dies entspricht dem Zustand extremer Öffnungsweite des jeweiligen Karosserieteils, also der Motorhaube oder des Kofferraumdeckels. Soll von dieser Stellung zurückgeschaltet werden auf die Normalöffnungsstellung, so ist hierzu nur ein kleiner Radialweg auf das Riegelelement von Hand aufzubringen. Andererseits ist gegen noch weitergehende Öffnung eine zuverlässige Sicherung dadurch gewährleistet, daß zur Vorbereitung einer solcher noch weitergehenden Öffnung das Riegelelement weiter auch noch über den Restweg verschoben werden müßte. Diese weitergehende Radialverschiebung des Riegelelements über den Restweg ist aber erschwert, insbesondere dadurch, daß in dem Umgebungsbereich der ersten Durchbrechung eine relativ seichte Fingermulde als Anschlagfläche zur Verfügung steht.

Wenn nun andererseits das Riegelelement in die zweite Durchbrechung eingreift, so entspricht dies der Normalöffnung der Motorhaube oder des Kofferraumdeckels. Die Gasfeder kann dann mit ihrem Zylinder gar nicht mehr weiter in den Mantelteil einfahren, weil der Boden der Gasfeder gegen den Boden des Mantelteils stößt. Insofern besteht in diesem Zustand kein Problem bezüglich einer sicheren Verriegelung für nachfolgende Axialverschiebung in der ersten Relativverschieberichtung. Hingegen besteht nach wie vor das Problem einer sicheren Verriegelung gegen Austeleskopieren des Gasfederzylinders aus dem Mantelteil etwa im Hinblick auf die Gefahr eines Windstoßes, welcher das betreffende Karosserieteil selbsttätig heben könnte.

Es ist aber eine zuverlässige Verriegelung gewährleistet, weil für eine Entriegelung im Hinblick auf eine Axialverschiebung in der zweiten Relativverschieberichtung, d. h. im Hinblick auf ein Austeleskopieren des Zylinders aus dem Mantelteil, ein größerer Radialweg des Riegelelements erforderlich ist. Trotzdem ist eine beabsichtigte Lösung der Verriegelung leicht möglich dadurch, daß eine relativ tiefe Fingermulde im Umgebungsbereich der zweiten Durchbrechung eine Durchführung des größeren Radialwegs ohne starke Anpressung des Fingers gegen den Grund der Fingermulde erlaubt, d.h. ohne daß das Fleisch des Fingers zwischen den Rändern der Fingermulde einwärts gequetscht werden muß.

Zusätzlich kann auch bei dieser Ausführungsform dafür gesorgt sein, daß bei Eingriff des Riegelelements in die erste Durchbrechung die Radialeinwärtsbewegung des Riegelelements dann gesperrt ist, wenn ein zwischen dem Riegelelement und der ersten Durchbrechung bestehendes Axialspiel durch Axialverschiebung in der ersten Relativverschieberichtung aufgebracht ist. In diesem Fall ist zur Lösung der Verriegelung im Hinblick auf eine nachfolgende Axialverschiebung in der ersten Relativverschieberichtung die Notwendigkeit gegeben, daß das betreffende Karosserieelement von Hand um eine ganz kleine Strecke angehoben werden muß, bevor die Entriegelung für eine nachfolgende Axialverschiebung in der ersten Relativverschieberichtung überhaupt stattfinden kann. Damit ist dann auch die Verriegelung gegen eine Überführung des Karosserieteils aus der Extremöffnungsstellung in die Normalöffnungsstellung durch eine Zusatzmaßnahme gesichert, obwohl die notwendige Einwirkungskraft auf das Riegelelement zur Vorbereitung der Axialverschiebung in der ersten Relativverschieberichtun relativ gering ist.

Bei der Ausführungsform nach der deutschen Offenlegungsschrift 39 40 916 und der europäischen Offenlegungsschrift EP 0 432 767A1 ist eine Drehsicherung des Zylinders gegenüber dem Mantelteil, dadurch gewährleistet, daß an dem Mantelteil in Achsrichtung eine Linearführungsbahn verläuft und daß an dem Zylinder ein in diese Linearführungsbahn eingreifendes Bahnfolgerelement angebracht ist. Durch diese Drehsicherung ist sichergestellt, daß bei einer Axialverschiebung des Riegelelements zwischen einer ersten Durchbrechung und einer zweiten Durchbrechung das Riegelelement bei Erreichen der jeweils zweiten Durchbrechung zwangsläufig in diese hineinfindet, auch dann, wenn eine solche Drehsicherung - was grundsätzlich möglich ist - nicht etwa durch unverdrehbare Festlegung beider Teile an jeweils einem Konstruktionsteil einer übergeordneten Konstruktion gewährleistet ist. Bei der bekannten Ausführungsform ist diese Drehsicherung nun in der Weise ausgebildet, daß an einem mit dem Zylinderboden der Gasfeder verbundenen Gehäuseteil ein Drehsicherungsnocken angebracht ist, welcher in eine nach radial innen offene Nut des Mantelteils eingreift und in dieser gleitet. Dabei ist der Drehsicherungsnocken in axialer Richtung beidseits des Riegelelements angeordnet, so daß er in die Seitenflächen der Nut eingreift, während die radial äußere Endfläche des Riegelelements, die gleichzeitig als Schleiffläche dient, mit der von dem Nutboden gebildeten Schleifbahn zusammenwirkt und nicht mit den Seitenflächen der Nut in Eingriff steht. Dabei ergibt sich nun folgende Schwierigkeit: Die radial äußere, als Schleiffläche und als Entriegelungsfläche dienende Endfläche des Riegelelements muß im Hinblick auf eine schmerzfreie Einwirkungsmöglichkeit eines zur Auslösung eingesetzten Fingers einen relativ großen Flächeninhalt haben, und zwar muß sie sowohl in Umfangsrichtung als auch in Axialrichtung eine gewisse Mindestausdehnung haben. Dies bedeutet, daß die Seitenflächen der Nut, um das Riegelelement überhaupt aufnehmen zu können, in Umfangsrichtung einen relativ großen Abstand haben müssen. Dies bedeutet, daß der Gesamtquerschnitt des Mantelteils vergrößert werden muß. Demgegenüber wird erfindungsgemäß weiter vorgeschlagen, daß die Linearführungsbahn des Mantelteils und das Bahnfolgerelement des Zylinders in Umfangsrichtung um die Achse winkelversetzt sind, und zwar vorzugsweise um 180°, gegenüber dem Riegelelement und der mindestens einen Durchbrechung. Dann braucht man bei der Bemessung der Breite der Linearführungsbahn in Umfangsrichtung um die Achse keine Rücksicht mehr auf die notwendige Breite des Riegelelements in Umfangsrichtung zu nehmen. Man kann vielmehr die Form der Linearführungsbahn und des in sie eingreifenden Bahnfolgerelements allein mit Rücksicht auf die Drehsicherungsfunktion bestimmen und verhältnismäßig schmal machen. Dies ist insbesondere dann von Bedeutung, wenn die Linearführungsbahn von einer nach radial innen offenen und nach radial außen geschlossenen Nut gebildet ist. Bei einer solchen Ausführungsform wird durch Geringhaltung der peripheren Breite der Nut zum einen Materialersparnis und zum anderen erhöhte Festigkeit erreicht.

Man kann sich ohne weiteres vorstellen, daß dann, wenn die Nut als eine verhältnismäßig dünnwandige Schale mit auf der Außenseite als Rippe erscheinender Form hergestellt ist, der Biegesteifigkeitsbeitrag der Rippe umso größer ist, je geringer der periphere Abstand der Nutseitenwände ist.

Die winkelmäßige Beabstandung des Bahnfolgerelements und der Linearführungsbahn ist im Vergleich zu der aus den obengenannten Schriften bekannten Ausführungsform auch insofern von Vorteil, als bei der bekannten Ausführungsform das Riegelelement zwar an einander in axialer Richtung gegenüberstehenden Flächen von zwei Nockenteilen geführt ist, in peripherer Richtung aber freiliegt. Bei der hier vorgeschlagenen Ausführungsform läßt sich das Riegelelement ringsum bis an die Schleifbahn heran führen.

Die beiliegenden Figuren erläutern die Erfindung anhand von Ausführungsbeispielen. Es stellen dar:
- Fig. 1: eine Verstelleinrichtung, mit einer Gasfeder, die in einem Mantelrohr längsverschiebbar und in verschiedenen Durchbrechungen arretierbar ist;
- Fig. 2: die Detaildarstellung eines einer Gasfeder zugeordneten Verriegelungskörpers, mit in einer Durchbrechung arretiertem Riegelelement;
- Fig. 3: die Detaildarstellung eines Verriegelungskörpers mit Führungskeil und seitlichen Anfasungen;
- Fig. 4: die Vorderansicht des Verriegelungskörpers nach der Fig. 3;
- Fig. 4a: eine Draufsicht zu Fig. 4 in Pfeilrichtung IVa der Fig. 4;
- Fig. 5: die Seitenansicht eines Mantelrohres mit Durchbrechungen und durch Ausstanzungen ausgeformten Federzungen;
- Fig. 6: den Schnitt durch das Mantelrohr entlang der Linie VI-VI in der Fig. 5, mit radial nach innen weisenden Federzungen;
- Fig. 7: den Schnitt durch ein Mantelrohr einer Verstelleinrichtung entlang der Linie VII-VII in der Fig. 5;
- Fig. 8: einen Schnitt entsprechend Fig. 7 bei einer weiteren Ausführungsform;
- Fig. 9: einen Längsschnitt durch den Verriegelungskörper bei der weiteren Ausführungsform;
- Fig. 10: einen Schnitt nach Linie X-X der Fig. 9 und
- Fig. 11: eine Draufsicht zu Fig. 9 in Pfeilrichtung XI.

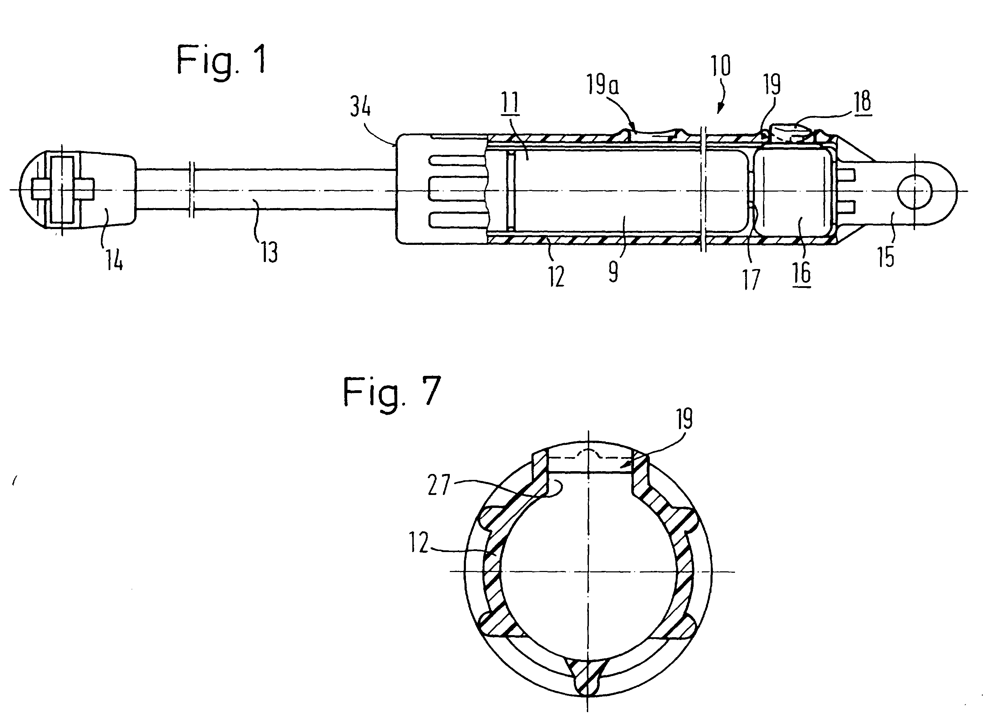

Die in der Fig. 1 dargestellte Verstelleinrichtung 10 besteht im wesentlichen aus einer Gasfeder 11, die in einem Mantelrohr 12 längsverschiebbar angeordnet ist. Die Gasfeder 11 weist eine Kolbenstange 13 auf, die an ihrer dem Zylinder 9 abgewandten Seite mit einer Kolbenstangenanlenkung 14 versehen ist. Das Mantelrohr 12 ist einseitig offen, wobei die Kolbenstange 13 der Gasfeder 11 aus dem offenen Ende herausgeführt ist, während an dem geschlossenen Ende ein Befestigungsauge 15 zur fahrzeugseitigen Befestigung vorgesehen ist.

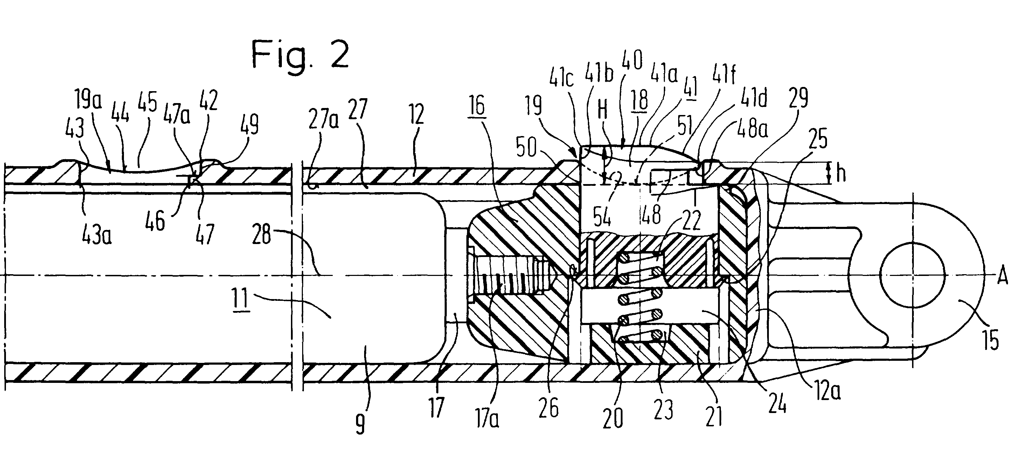

Auf der der Kolbenstange 13 abgewandten Seite ist die Gasfeder über eine Verbindung 17 mit einem Verriegelungskörper 16 verbunden. Wie die Fig. 2 im Detail zeigt, weist die Verbindung 17 ein Schraubgewinde 17a auf, mit dem sie in den Verriegelungskörper 16 eingeschraubt ist. Der Verriegelungskörper 16 enthält einen Riegel 18, der gegen den Druck einer Feder 20 quer zur Längsachse 28 des Mantelrohres 12 bewegbar ist. Der Verriegelungskörper 16 weist einen Boden 21 auf, in der eine untere Federlagerung 23 vorgesehen ist. Der Riegel 18 weist eine obere Federlagerung 22 auf, die mit der unteren Federlagerung 23 fluchtet. Die Feder 20 ist bei dem dargestellten Ausführungsbeispiel als Schraubendruckfeder ausgebildet und in den Federlagerungen 22 und 23 festgelegt. Zwischen dem Boden 21 und dem Riegel 18 ist ein Freiraum 24 vorgesehen, um den der Riegel 18 quer zu der Längsachse 28 des Mantelrohres 12 bewegbar ist.

Das Mantelrohr 12 weist nahe seinem geschlossenen Ende 12a eine Durchbrechung 19 auf, durch
die der Riegel 18 von der Feder 20 radial nach außen gedrückt und eingerastet wird.

Wie die Fig. 1 und 2 weiter zeigen, weist das Mantelrohr 12 in seinem Längsverlauf noch mindestens eine weitere Durchbrechung 19a auf, die der Ganzoffenstellung der Verstelleinrichtung 10 entspricht. Je nach Anforderungen können noch weitere Durchbrechungen vorgesehen sein.

Um zu verhindern, daß der Riegel 18 aus dem Verriegelungskörper 16 herausgedrückt wird, ist er mit Sperrzungen 25 versehen, die gegen Hinterschneidungen 26 des Verriegelungskörpers 16 anliegen und so die Radialbewegung des Riegels 18 begrenzen.

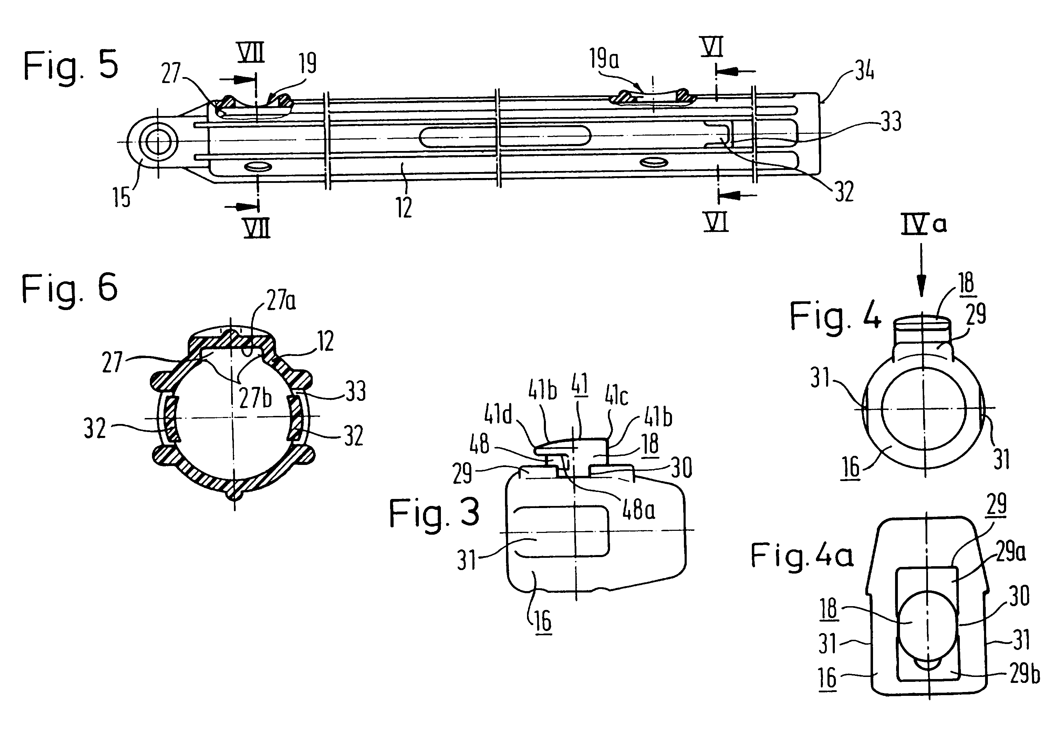

Wie in den Fig. 3 und 4 dargestellt ist, weist der Verriegelungskörper 16 einen Führungsnocken 29 auf, der in der Längsnut 27 des Mantelrohres 12 geführt ist. Der Führungsnocken 29 stützt dabei den Verriegelungskörper 16 gegen Verdrehen ab und verhindert, daß Verdrehkräfte auf den Riegel 18 übertragen werden. Der Riegel 18 ist dadurch von Verdrehkräften frei geführt und kann im Bereich einer Ausnehmung 30 des Führungsnockens 29 einwärts gedrückt werden.

Um den Verriegelungskörper 16 mit der Gasfeder 11 verbinden zu können, wie dies in der Fig. 2 dargestellt ist, sind etwa um 90° zu dem Führungsnocken 29 versetzte, einander gegenüberliegende Anfasungen 31 vorgesehen. Die Anfasungen 31 dienen als Schlüsselflächen für ein entsprechendes Werkzeug, mit dem ein Drehmoment zum Aufschrauben aufgebracht werden kann.

Das in der Fig. 5 dargestellte Mantelrohr 12 weist neben den Durchbrechungen 19 und 19a Federzungen 32 auf, wie sie in der Fig. 6 im Detail dargestellt sind. Die Federzungen 32 sind in U-förmigen Ausstanzungen 33 im Bereich des offenen Endes 34 bzw. der Durchbrechung 19a aus dem Mantelrohr 12 radial nach innen gebogen. Die Federzungen 32 liegen bei eingesetzter Gasfeder 11 an dieser an und verhindern eine radiale Relativbewegung. Eine Geräuschbildung durch radiale Relativbewegungen zwischen dem Mantelrohr 12 und der Gasfeder 11 wird dadurch vermieden. Bei dem gezeigten Ausführungsbeispiel sind zwei einander gegenüberliegende Federzungen 32 dargestellt, im Bedarfsfall können jedoch auch eine Vielzahl von Federzungen auf dem Umfang verteilt vorgesehen sein. Bei einer anderen Ausführung können mehrere radial nach innen weisende Federzungen 32 auf der Länge des Mantelrohres 12 verteilt vorgesehen sein.

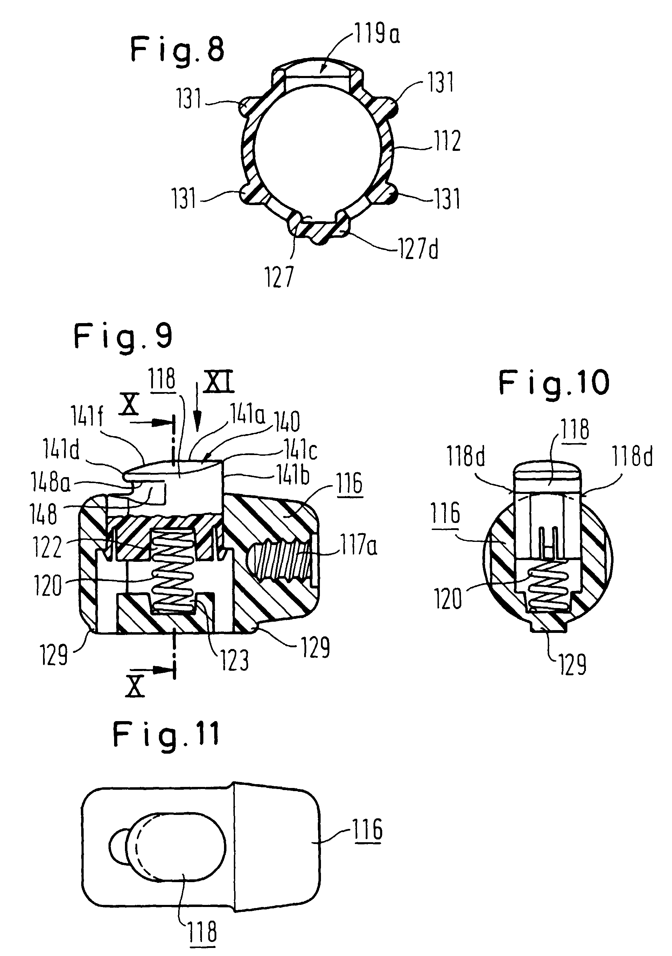

Wie die Fig. 7 zeigt, ist das Mantelrohr 12 innen mit einer Längsnut 27 versehen, in der der Nocken 29 entlang gleitet. Der Riegel 18 ist durch den Nocken 29 in der Längsnut 27 sicher geführt, so daß er nach dem Lösen sicher die nächste Riegelrast 19 bzw. 19a findet und durch den Druck der Feder 20 wieder sicher einrastet. Auch wird verhindert, daß sich die Gasfeder 11 bei gelöstem Riegel 18 in dem Mantelrohr 12 verdreht. Ein unbeabsichtigtes zu weites Ausfahren der Gasfeder 11 aus dem Mantelrohr 12 wird auf diese Weise sicher vermieden.

In der Ausführungsform nach den Fig. 1 - 6 bedeutet 19a eine erste Durchbrechung und 19 eine zweite Durchbrechung. Der Riegel 18 ist an seinem radial äußeren Ende mit einer Entriegelungsfläche 40 versehen, deren Scheitellinie mit 41 bezeichnet ist. Die Scheitellinie 41 weist einen achsparallelen Abschnitt 41a auf, welcher in eine Anschlagflanke 41b und eine zur Achsrichtung A spitzwinklig geneigte Nockenflanke 41f übergeht.

Man stelle sich nun vor, daß der Riegel 18 in die erste Durchbrechung 19a eingreift. Dann liegt die Anschlag flanke 41b des Riegels 18 an einer Gegenanschlagkante 43 des Durchbrechungsrands 42 an. In er Verriegelungsstellung ist die Position des Riegels 18 durch den Anschlag der Sperrzungen 25 an der Hinterschneidung 26 bestimmt. Soll nun der Eingriff des Riegels 18 aus der ersten Durchbrechung 19a für eine nachfolgende weitere Verschiebung des Gasfederzylinders 9 nach links entriegelt werden, so ist es notwendig, den Riegel 18 radial so weit einzudrücken, daß die Übergangskante 41c bis unterhalb der Kante 43a verschoben wird. Hierzu ist es notwendig, das Riegelelement 18 um einen größeren Radialweg H nach einwärts zu drücken. Diesem Radialeinwärtsdrücken des Riegels 18 um den Radialweg H wirkt zum einen die steigende Rückstellkraft der Schraubendruckfeder 22 entgegen. Zum anderen wird das Einwärtsdrücken um den großen Radialweg H auch dadurch erschwert, daß der auf die Entriegelungsfläche 40 drückende Finger gegen eine Anschlagfläche 44 zur Anlage kommt, bevor die Kante 41c auf das Niveau der Kante 43a gelangt, so daß ein weiteres Eindrücken des Riegels 18 nur unter Verformung des Fingerfleisches im Bereich der Fingermulde 45 möglich ist. Damit ist sichergestellt, daß der Riegel 18 nur schwer in eine Entriegelungsstellung gedrückt werden kann, in welcher der Zylinder 9 nachfolgend vollständig aus dem Mantelrohr 12 ausgeschoben werden kann.

Hingegen ist die Entriegelung für eine nachfolgende Einwärtsverschiebung des Gasfederzylinders 9 in Richtung auf das geschlossene Ende 12a des Mantelrohrs 12 sehr viel leichter möglich. Man erkennt, daß man hierzu lediglich die Kante 41d am Ende der Nockenflanke 41f unterhalb die Kante 46 des Durchbrechungsrands 42 zu drücken braucht, d. h., daß man den Riegel 18 lediglich um einen kleinen Radialweg h radial einwärts zu bewegen braucht. Ist die Kante 41d einmal radial einwärts der Kante 46 des Durchbrechungsrands 42 gelangt, so braucht man nur noch den Zylinder 9 in Achsrichtung A in Richtung auf das geschlossene Ende 12a des Mantelrohrs 12 hin zu verschieben. Die notwendige restliche Radialeinwärtsbewegung H minus h wird dann durch nockenartiges Zusammenwirken der Flanke 41f und der Kante 46 erreicht, solange, bis der achsparallele Abschnitt 41a der Scheitellinie 41 an der Schleifbahn 27a der Längsnut 27 zur Anlage kommt. Dann kann der Zylinder 9 im wesentlichen ohne mechanischen Widerstand eingeschoben werden.

Da die Gasfeder bei Einbau in ein Kraftfahrzeug regelmäßig in Richtung auf das geschlossene Ende 12a hin durch Schwerkraft belastet ist, bringt das überwinden des durch den Eingriff der Nockenflanke 41f mit der Kante 46 erzeugten Einschubwiderstands keine Schwierigkeit.

Man erkennt in der Fig. 2 weiter, daß von dem Durchbrechungsrand 42 in die erste Durchbrechung 19a ein Sperrvorsprung 47 hineinragt. Dieser Sperrvorsprung 47 weist eine radial auswärts gerichtete Sperrfläche 47a auf. Demgegenüber ist an dem Riegel 18 eine Hinterschneidung 48 mit einer Sperrfläche 48a angebracht.

Nimmt man nun wieder an, daß der Riegel 18 in die erste Durchbrechung 19a eingreift, so befindet sich die Sperrfläche 48a radial außerhalb der Sperrfläche 47a des Sperrvorsprungs 47. Andererseits hat der Riegel 18 in Achsrichtung A gegenüber der ersten Durchbrechung 19a ein Axialspiel. Liegt die Anschlagflanke 41b an der Anschlagkante 43 an, so ist die Sperrfläche 48a in radialer Richtung außer Überdeckung mit der Sperrfläche 47a, und der Riegel 18 kann um den Kurzen Weg h radial einwärts geschoben werden, der notwendig ist, um eine nachfolgende Verschiebung des Zylinders 9 in Richtung auf das geschlossene Ende 12a des Mantelrohrs 12 einzuleiten. Wenn aber der Riegel 18 unter Ausnutzung des axialen Spiels so weit innerhalb der ersten Durchbrechung 19a nach rechts verschoben ist, daß die Kante 41d an der Kante 49 des Durchbrechungsrands 42 anliegt, so befindet sich die Sperrfläche 48a in radialer Überdeckung mit der Sperrfläche 47a, und eine Radialeinwärtsverschiebung des Riegels 18, d. h. eine Entriegelung des Riegels 18, ist dann nicht möglich.

Nimmt man nun wieder den Fall an, daß die Einrichtung gemäß Fig. 2 zwischen dem Fahrzeugrahmen und einem Kofferraumdeckel eines Kraftfahrzeugs eingebaut ist, so ist die Einrichtung in axialer Richtung belastet und es liegt die vorstehend beschriebene Situation vor, daß die Kante 41d gegen die Kante 49 anliegt. Dann kann der Riegel nicht ohne weiteres radial einwärts verschoben werden. Es ist vielmehr notwendig, zunächst durch Handkraftausübung auf den Kofferraumdeckel den Gasfederzylinder so weit aus dem Mantelrohr 12 herauszuziehen, daß die Anschlagflanke 41b gegen die Anschlagkante 43 stößt. Erst dann kann der Riegel 18 zum Zwecke der Entriegelung um den eg h radial einwärts bewegt werden, um dann mit der Nockenflanke 41f die Kante 46 zu untergreifen. Es ist also sichergestellt, daß die Verriegelung auch für eine nachfolgende Bewegung des Gasfederzylinders 9 in Richtung auf das Ende 12a hin zuverlässig arbeitet, obwohl die radiale Entriegelungsbewegung des Riegels 18 nur über einen kurzen Weg h zu erfolgen hat und daher durch leichten Fingerdruck erzielt werden kann.

Befindet sich der Riegel 18 in der zweiten Durchbrechung 19, so ist es zur Entriegelung notwendig, den Riegel 18 um den Radialweg H radial einwärts zu verschieben, bis die Kante 41c radial innerhalb der Kante 50 liegt. Es ist also ein relativ großer Hub H zur Entriegelung auszuführen. Damit ist die Verriegelung sehr zuverlässig, und es ist gewährleistet, daß der Kofferraumdeckel in der normalen Öffnungsstellung nicht durch einen Windstoß aufgerissen werden kann. Trotzdem ist die Verriegelung auch in diesem Zustand leicht entriegelbar, weil bei einem radialen Fingerdruck auf den Riegel 18 der Finger nicht oder erst kurz vor Vorbeigang der Kante 41c an der Kante 50 gegen die Anschlagfläche 51 einer Fingermulde 54 stößt, welche wesentlich tiefer ist als die seichte Fingermulde 45.

In Fig. 4 erkennt man den in zwei Teilnocken 29a und 29b unterteilten Führungsnocken 29, welcher zum Eingriff in die Längsnut 27 ausgebildet ist. Die Nocken 29a und 29b liegen an den Seitenflächen 27b der Längsnut 27 im wesentlichen spielfrei an, so daß die Drehsicherung des Verriegelungskörpers 16, der gleichzeitig Riegelgehäuse des Riegels 18 ist, ausschließlich durch die Teilnocken 29a und 29b bewirkt wird, während der Riegel 18 von jeder Berührung mit den Seitenflächen 27b frei bleibt und deshalb nicht verklemmt werden kann.

In den Fig. 8, 9, 10 und 11 ist eine Abwandlung zur Ausführungsform nach den Fig. 1 - 7 dargestellt. Analoge Teile sind mit gleichen Bezugszeichen versehen wie in der Ausführungsform nach den Fig. 1 - 7.

Im Unterschied zu der Ausführungsform nach den Fig. 1 - 7 ist bei der Ausführungsform nach den Fig. 8 - 11 der Führungsnocken 129 gegenüber dem Riegel 118 um 180° versetzt, während die Längsnut 127 gegenüber der Durchbrechung 119a um 180° versetzt ist. Daraus ergibt sich, daß die Längsnut 127 ohne Rücksicht auf die Umfangsbreite des Riegels 118 schmal gehalten werden kann und entsprechend der Führungsnocken 129. Damit ergibt sich eine Materialeinsparung, und es ergibt sich weiter, daß die im Bereich der Längsnut 127 an der Außenseite des Mantelrohrs 112 gebildete Rippe 127d einen wesentlichen Beitrag zu einer Biegeversteifung des Mantelrohrs 112 leisten kann. Diese Biegeversteifung ist umso wirksamer, als sie nicht durch Durchbrechungen unterbrochen wird. Die Rippe 127d kann deshalb zusammen mit weiteren Rippen 131 für eine hohe Biege- und Knickfestigkeit des Mantelrohrs 112 sorgen.

Weiterhin ergibt sich der vorteilhafte Effekt, daß der Riegel 118 auch in seinen Bereichen 118d bis an den Rand der Durchbrechung 119a seitlich geführt ist.

Der Riegelkörper 116 und das Mantelrohr 112 lassen sich, wie schon nach der Ausführungsform nach den Fig. 1 - 7, leicht aus Kunststoff spritzen oder pressen, ebenso der Riegel 118. Die Gasfeder kann auch hier in herkömmlicher Weise ausgebildet werden, wobei der Riegelkörper 116 mittels des Gewindes 117a auf einen Schraubzapfen an dem Gasfederboden aufgeschraubt wird, welcher bei herkömmlichen Gasfedern zur Befestigung eines Anlenkauges dient.

Die Ausbildung der Fingermulden mit unterschiedlicher Tiefe für verschiedene Durchbrechung ist ein wesentliches Merkmal der Erfindung, das bei teleskopischen Positioniervorrichtungen mit mehreren Verriegelungspositionen auch unabhängig von dem Merkmal der unterschiedlichen Radialwege des Riegelelements für verschiedene beabsichtigte Relativverschieberichtungen angewandt werden kann. Durch dieses Merkmal der unterschiedlichen Fingermuldentiefen wird erreicht, daß bei mehreren Verriegelungspositionen ein Unterschied geschaffen wercen kann zwischen solchen, in denen eine besonders sichere Verriegelung notwendig ist, und solchen, in denen eine leichtgängige Entriegelung gefordert wird.

Zu der Figur 2 ist noch nachzutragen, daß die Sperrzungen 25 mit den Hinterschneidungen 26, insbesondere im Hinblick auf eine unverlierbare Vormontage des Riegelelements 18 in dem Verriegelungskörper 16 von Bedeutung sind. Sobald der Verriegelungskörper 16 einmal in das Mantelrohr 12 eingeführt ist, wird die radial äußere Festlegung des Riegelelements 18 bei Durchgriff durch eine der Durchbrechungen 19,19a von dem Mantelrohr 12 übernommen dadurch, daß der Querschnitt des Riegelelements 18 innerhalb des Verriegelungskörpers 16 in Achsrichtung größer bemessen ist als die Durchbrechungen 19,19a. Damit liegt nach Zusammenbau von Gasfeder und Mantelrohr das Riegelelement 18 im Bereich der Hinterschneidung 48 zwangsläufig an der Innenumfangsfläche des Mantelrohrs 12 an mit der Folge, daß der Eingriff der Sperrzungen 25 in der Hinterschneidung 26 dann nicht mehr notwendig ist, um die radial äußere Stellung des Riegelelements 18 festzulegen. Die Sperrzungen 25 übernehmen in diesem Fall erst dann wieder eine Verlustsicherungsfunktion, wenn die Gasfeder aus irgend einem Grund aus dem Mantelrohr 12 herausgezogen wird.

## Patentansprüche

1. Teleskopische Positioniereinrichtung zum Einbau zwischen zwei Konstruktionsteilen einer übergeordneten Konstruktion mit einer Achse (A), einer Gasfeder (11) und einem auf dem Zylinder der Gasfeder (11) in Achsrichtung (A) verschiebbaren Mantelteil (12),
wobei das Mantelteil (12) ein Ausschubende (34) besitzt, an dem Mantelteil (12) ein Verbindungselement (15) zur Verbindung mit einem Konstruktionsteil der übergeordneten Konstruktion angebracht ist, eine Kolbenstange (13) der Gasfeder (11) aus dem Ausschubende (12a) des Mantelteils (12) herausgeführt ist und an dem äußeren Endbereich der Kolbenstange (13) ein weiteres Verbindungselement (14) zur Verbindung mit einem weiteren Konstruktionsteil der übergeordneten Konstruktion angebracht ist,
wobei weiter an dem Zylinder (9) in einem kolbenstangenfernen Abschnitt ein Riegelelement (18) zum Eingriff in mindestens eine Durchbrechung (19a) des Mantelteils (12) vorgesehen ist, so daß bei Eingriff des Riegelelements (18) in die Durchbrechung (19a) eine Axialverschiebung von Zylinder (9) und Mantelteil (12) im wesentlichen blockiert ist,
wobei weiter das Riegelelement (18) im wesentlichen radial von der Achse (A) weg in Richtung auf eine Verriegelungsstellung vorgespannt ist, so daß bei Einstellung des Riegelelements (18) in Radialflucht zu der Durchbrechung (19a) das Riegelelement (18) zwangsläufig in seine Verriegelungsstellung und damit in die Durchbrechung (19) eintritt, und
wobei am radial äußeren Ende des Riegelelements (18) eine für äußere Radialkrafteinwirkung, insbesondere Fingereinwirkung, zugängliche Entriegelungsfläche (40) vorgesehen ist, welche eine Bewegung des Riegelelements (18) nach radial einwärts auszuführen gestattet, so daß eine Blokkierung der Axialverschiebung zwischen dem Zylinder (9) und dem Mantelteil (12) gelöst wird und eine Schleiffläche (40) des Riegelelements (18) nach Einleitung einer Axialverschiebung in Schleifeingriff mit einer Schleifbahn (27a) des Mantelteils (12) gelangt,
dadurch gekennzeichnet,
daß die Größe des zur Lösung der Blockierung notwendigen, durch äußere Radialkrafteinwirkung auf die Entriegelungsfläche (40) herbeizuführenden Radialwegs (H,h) des Riegelelements (18) von der Relativverschieberichtung einer nachfolgend beabsichtigten Axialverschiebung zwischen dem Zylinder (9) und dem Mantelteil (12) abhängig unterschiedlich ist, wobei einer ersten Relativverschieberichtung mit geringerem Gefahrenpotential ein kleinerer Radialweg (h) und einer zweiten Relativverschieberichtung mit größerem Gefahrenpotential ein größerer Radialweg (H) entspricht.

2. Teleskopische Positioniereinrichtung zum Einbau zwischen zwei Konstruktionsteilen einer übergeordneten Konstruktion mit einer Achse (A), einer Gasfeder (11) und einem auf dem Zylinder der Gasfeder (11) in Achsrichtung (A) verschiebbaren Mantelteil (12),
wobei das Mantelteil (12) ein Ausschubende (34) besitzt, an dem Mantelteil (12) ein Verbindungselement (15) zur Verbindung mit einem Konstruktionsteil der übergeordneten Konstruktion angebracht ist, eine Kolbenstange (13) der Gasfeder (11) aus dem Ausschubende (12a) des Mantelteils (12) herausgeführt ist und an dem äußeren Endbereich der Kolbenstange (13) ein weiteres Verbindungselement (14) zur Verbindung mit einem weiteren Konstruktionsteil der übergeordneten Konstruktion angebracht ist,
wobei weiter an dem Zylinder (9) in einem kolbenstangenfernen Abschnitt ein Riegelelement (18) zum Eingriff in mindestens eine Durchbrechung (19a) des Mantelteils (12) vorgesehen ist, so daß bei Eingriff des Riegelelements (18) in die Durchbrechung (19a) eine Axialverschiebung von Zylinder (9) und Mantelteil (12) im wesentlichen blockiert ist,
wobei weiter das Riegelelement (18) im wesentlichen radial von der Achse (A) weg in Richtung auf eine Verriegelungsstellung vorgespannt ist, so daß bei Einstellung des Riegelelements (18) in Radialflucht zu der Durchbrechung (19a) das Riegelelement (18) zwangsläufig in seine Verriegelungsstellung und damit in die Durchbrechung (19) eintritt, und
wobei am radial äußeren Ende des Riegelelements (18) eine für äußere Radialkrafteinwirkung, insbesondere Fingereinwirkung, zugängliche Entriegelungsfläche (40) vorgesehen ist, welche eine Bewegung des Riegelelements (18) nach radial einwärts auszuführen gestattet, so daß eine Blokkierung der Axialverschiebung zwischen dem Zylinder (9) und dem Mantelteil (12) gelöst wird und eine Schleiffläche (40) des Riegelelements (18) nach Einleitung einer Axialverschiebung in Schleifeingriff mit einer Schleifbahn (27a) des Mantelteils (12) gelangt,
dadurch gekennzeichnet,
daß im Umgebungsbereich von Durchbrechungen (19a,19) an der Außenseite des Mantelteils (12) Anschlagflächen (44,51) für ein auf die Entriegelungsfläche (40) im wesentlichen radial einwirkendes Löseorgan, insbesondere einen Finger, vorgesehen sind, welche für verschiedene Durchbrechungen (19a,19) unterschiedlichen Radialabstand von der Achse (A) besitzen, gewünschtenfalls in Verbindung mit der Ausgestaltung nach Anspruch 1.

3. Teleskopische Positioniereinrichtung zum Einbau zwischen zwei Konstruktionsteilen einer übergeordneten Konstruktion mit einer Achse (A), einer Gasfeder (11) und einem auf dem Zylinder der Gasfeder (11) in Achsrichtung (A) verschiebbaren Mantelteil (12),
wobei das Mantelteil (12) ein Ausschubende (34) besitzt, an dem Mantelteil (12) ein Verbindungselement (15) zur Verbindung mit einem Konstruktionsteil der übergeordneten Konstruktion angebracht ist, eine Kolbenstange (13) der Gasfeder (11) aus dem Ausschubende (12a) des Mantelteils (12) herausgeführt ist und an dem äußeren Endbereich der Kolbenstange (13) ein weiteres Verbindungselement (14) zur Verbindung mit einem weiteren Konstruktionsteil der übergeordneten Konstruktion angebracht ist,
wobei weiter an dem Zylinder (9) in einem kolbenstangenfernen Abschnitt ein Riegelelement (18) zum Eingriff in mindestens eine Durchbrechung (19a) des Mantelteils (12) vorgesehen ist, so daß bei Eingriff des Riegelelements (18) in die Durchbrechung (19a) eine Axialverschiebung von Zylinder (9) und Mantelteil (12) im wesentlichen blockiert ist,
wobei weiter das Riegelelement (18) im wesentlichen radial von der Achse (A) weg in Richtung auf eine Verriegelungsstellung vorgespannt ist, so daß bei Einstellung des Riegelelements (18) in Radialflucht zu der Durchbrechung (19a) das Riegelelement (18) zwangsläufig in seine Verriegelungsstellung und damit in die Durchbrechung (19) eintritt, und
wobei am radial äußeren Ende des Riegelelements (18) eine für äußere Radialkrafteinwirkung, insbesondere Fingereinwirkung, zugängliche Entriegelungsfläche (40) vorgesehen ist, welche eine Bewegung des Riegelelements (18) nach radial einwärts auszuführen gestattet, so daß eine Blokkierung der Axialverschiebung zwischen dem Zylinder (9) und dem Mantelteil (12) gelöst wird und eine Schleiffläche (40) des Riegelelements (18) nach Einleitung einer Axialverschiebung in Schleifeingriff mit einer Schleifbahn (27a) des Mantelteils (12) gelangt,
dadurch gekennzeichnet,
daß das Riegelelement (18) in seiner Verriegelungsstellung ein Axialspiel gegenüber der Durchbrechung (19a) besitzt und daß eine Radialeinwärtsbewegung des Riegelelements (18) dann gesperrt ist, wenn dieses Axialspiel durch Axialverschiebung in einer Relativverschieberichtung wenigstens teilweise aufgebraucht ist, gewünschtenfalls in Verbindung mit der Ausgestaltung nach Anspruch 1 oder 2.

4. Teleskopische Positioniereinrichtung nach einem der Ansprüche 1-3,
dadurch gekennzeichnet,
daß die Radialbewegung des Riegelelements (18) durch äußere Radialkrafteinwirkung längs eines der Differenz (H-h) zwischen dem größeren (H) und dem kleineren (h) Radialweg entsprechenden Restwegs (H-h) erschwert ist.

5. Teleskopische Positioniereinrichtung nach Anspruch 4,
dadurch gekennzeichnet,
daß die Radialbewegung längs des Restwegs (H-h) durch Progression der Federkraft einer auf das Riegelelement (18) wirkenden Vorspanneinrichtung (22) erschwert ist.

6. Teleskopische Positioniereinrichtung nach Anspruch 4 oder 5,
dadurch gekennzeichnet,
daß im Umgebungsbereich der Durchbrechung (19a) an der Außenseite des Mantelteils (12) eine Anschlagfläche (44) für ein auf die Entriegelungsfläche (40) im wesentlichen radial einwirkendes Löseorgan, insbesondere einen Finger, vorgesehen ist, welche einen für nachfolgende Axialverschiebung von Zylinder (9) und Mantelteil (12) in der ersten Relativverschieberichtung notwendigen kleineren Radialweg (h) des Riegelelements (18) zuläßt, einen für die nachfolgende Axialverschiebung von Zylinder (9) und Mantelteil (12) in der zweiten Relativverschieberichtung notwendigen, größeren Radialweg (H) des Riegelelements aber erschwert.

7. Teleskopische Positioniereinrichtung nach einem der Ansprüche 1 - 6,
dadurch gekennzeichnet,
daß die Unterschiedlichkeit des notwendigen Radialwegs (H,h) des Riegelelements (18) für nachfolgende Axialverschiebung in unterschiedlichen Relativverschieberichtungen durch Ausbildung von zusammenwirkenden, in axialer Richtung einander gegenüberstehenden Nockenmitteln (41f,46) an dem Riegelelement (18) und einem Durchbrechungsrand (42) verursacht ist, welche bei Beginn einer Axialverschiebung in mindestens einer Relativverschieberichtung eine zusätzliche Radialbewegung des Riegelelements (18) nach radial einwärts über eine durch äußere Radialkrafteinwirkung auf die Entriegelungsfläche (40) erreichte Stellung hinaus bewirken.

8. Teleskopische Positioniereinrichtung nach Anspruch 7,
dadurch gekennzeichnet,
daß Nockenmittel (41f,46) nur in einem axialen Endbereich des Riegelelements (18) und in dem zugehörigen axialen Endbereich (49) des Durchbrechungsrands (42) vorgesehen sind.

9. Teleskopische Positioniereinrichtung nach einem der Ansprüche 7 und 8,
dadurch gekennzeichnet,
daß riegelelementseitige Nockenmittel (41f) durch Profilierung einer in Achsrichtung verlaufenden Scheitellinie (41) der Entriegelungsfläche (40) gebildet sind und daß durchbrechungsrandseitige Nockenmittel (46) an einem radial inneren Endbereich des Durchbrechungsrands (42) gebildet sind.

10. Teleskopische Positioniereinrichtung nach Anspruch 9,
dadurch gekennzeichnet,
daß die in Achsrichtung verlaufende Scheitellinie (41) einen im wesentlichen achsparallelen Abschnitt (41a) aufweist, welcher einendig in eine im wesentlichen radiale Anschlagflanke (41b) zum Zusammenwirken mit einem axialen Endbereich (43) des Durchbrechungsrands (42) übergeht und anderendig in eine gegen die Achse (A) spitzwinkelig geneigte Flanke (41f) zum nockenartigen Zusammenwirken mit einem gegenüberliegenden axialen Endbereich (46) des Durchbrechungsrands (42) übergeht, wobei im Bereich des achsparallelen Abschnitts (41a) die Schleiffläche ausgebildet ist.

11. Teleskopische Positioniereinrichtung nach einem der Ansprüche 3-10,
dadurch gekennzeichnet,
daß die Radialeinwärtsbewegung des Riegelelements (18) durch Sperrflächen (48a,47a) an dem Riegelelement (18) und an dem Durchbrechungsrand (42) sperrbar ist.

12. Teleskopische Positioniereinrichtung nach Anspruch 11,
dadurch gekennzeichnet,
daß eine riegelelementseitige Sperrfläche (48a) von einer radial einwärts der Entriegelungsfläche (40) gelegenen Hinterschneidung (48) des Riegelelements (18) und eine durchbrechungsrandseitige Sperrfläche (47a) von einem in axialer Richtung in die Durchbrechung (19a) hineinragenden Sperrvorsprung (47) des Durchbrechungsrands (42) gebildet sind.

13. Teleskopische Positioniereinrichtung nach einem der Ansprüche 1 - 12,
dadurch gekennzeichnet,
daß mindestens zwei axial beabstandete Durchbrechungen (19a,19) in dem Mantelteil (12) vorhanden sind, wobei bei Eingriff des Riegelelements (18) in eine erste Durchbrechung (19a) - entsprechend einer größeren Länge der Positioniereinrichtung - zur nachfolgenden Ausführung einer Axialverschiebung in einer ersten Relativverschieberichtung, welche das Riegelelement (18) an die zweite Durchbrechung (19) - entsprechend einer geringeren Länge der Positioniereinrichtung - annähert, ein kleinerer Radialweg (h) des Riegelelements (18) durch äußere Radialkrafteinwirkung erforderlich ist, wobei weiter bei Eingriff des Riegelelements (18) in diese erste Durchbrechung (19a) zur nachfolgenden Axialverschiebung in der zweiten Relativverschieberichtung ein größerer Radialweg des Riegelelements (18) durch äußere Radialkrafteinwirkung erforderlich ist,
wobei weiter bei Eingriff des Riegelelements (18) in die zweite Durchbrechung (19) zur nachfolgenden Axialverschiebung in der zweiten Relativverschieberichtung ein größerer Radialweg (H) des Riegelelements (18) durch äußere Radialkrafteinwirkung erforderlich ist, und
wobei die Radialbewegung des Riegelelements (18) durch äußere Radialkrafteinwirkung längs eines der Differenz (H-h) zwischen einem kleineren Radialweg (h) und einem größeren (H) Radialweg entsprechenden Restwegs (H-h) bei Eingriff des Riegelelements (18) in die zweite Durchbrechung (19) weniger erschwert ist als bei Eingriff des Riegelelements (18) in die erste Durchbrechung (19a).

14. Teleskopische Positioniereinrichtung nach Anspruch 13,
dadurch gekennzeichnet,
daß bei Eingriff des Riegelelements (18) in die erste Durchbrechung (19a) die Radialeinwärtsbewegung des Riegelelements (18) dann gesperrt ist, wenn ein zwischen dem Riegelelement (18) und der ersten Durchbrechung (19a) bestehendes Axialspiel durch Axialverschiebung in der ersten Relativverschieberichtung aufgebraucht ist.

15. Teleskopische Positioniereinrichtung nach Anspruch 13 oder 14,
dadurch gekennzeichnet,
daß der Zylinder (9) in der geringerer Länge entsprechenden Stellung einem Boden (12a) des Mantelteils (12) benachbart liegt und vorzugsweise an diesem anschlägt.

16. Teleskopische Positioniereinrichtung nach einem der Ansprüche 1 - 15,
dadurch gekennzeichnet,
daß der Zylinder (9) gegenüber dem Mantelteil ( 12) unverdrehbar geführt ist durch eine in Achsrichtung verlaufende Linearführungsbahn ( 27) an dem Mantelteil ( 12) und ein in diese Linearführungsbahn eingreifendes Bahnfolgerelement ( 29),

17. Teleskopische Positioniereinrichtung nach Anspruch 16,
dadurch gekennzeichnet,
daß das Bahnfolgerelement (129) und die Linearführungsbahn (127) in Umfangsrichtung um die Achse (A), um vorzugsweise 180°, winkelversetzt sind gegenüber dem Riegelelement (118) und der mindestens einen Durchbrechung (119a).

18. Teleskopische Positioniereinrichtung nach Anspruch 17,
dadurch gekennzeichnet,
daß die Linearführungsbahn (127) von einer nach radial innen offenen und nach radial außen geschlossenen Nut (127) gebildet ist, welche an mindestens einem axialen Ende (34) des Mantelteils (112) offen ist und daß das Bahnfolgerelement (129) von einem in die Nut (127) eingreifenden Drehsicherungsnocken (129) gebildet ist.

19. Teleskopische Positioniereinrichtung nach einem der Ansprüche 16 - 18,
dadurch gekennzeichnet,
daß das Riegelelement ( 18) an einem von dem Zylinder gesondert hergestellten Riegel gehäuse ( 16) aufgenommen ist und daß das Bahnfolgerelement ( 29) an diesem Riegelgehäuse ( 16) angebracht ist.

20. Teleskopische Positioniereinrichtung nach einem der Ansprüche 18 und 19,
dadurch gekennzeichnet,
daß die Nut (127) in einer von der Außenseite des Mantelteils (112) radial auswärts abstehenden, axial verlaufenden Rippe (127d) ausgebildet ist.

21. Verwendung einer teleskopischen Positioniereinrichtung nach einem der Ansprüche 1 - 20,
zur Positionierung eines um eine horizontale Achse schwenkbaren Karosserieteils eines Kraftfahrzeugs an einem Fahrzeugrahmen dieses Kraftfahrzeugs, wobei das Karosserieteil einem Schwerkraftmoment unterliegt und dieses Schwerkraftmoment die Positioniereinrichtung in Richtung auf eine Verkürzung ihrer effektiven Länge belastet.

## Claims

1. Telescopic positioning device to be mounted between two structural components of a superordinate mechanical structure, having an shaft (A), a pneumatic spring (11), and a shell component (12) which is shiftable on the cylinder of the pneumatic spring (11) in the axial direction (A); wherein the shell component (12) possesses a push-out end (34); wherein a connecting element (15) is fixed to the shell component (12), in order to connect with a structural component of the superordinate mechanical structure; wherein a piston rod (13) of the pneumatic spring is led out of the push-out end (12a) of the shell component (12); and wherein a further connecting element (14) is fixed to the outer end-region of the piston rod (13), for connection to a further structural component of the superordinate mechanical structure; wherein furthermore there is provided, on the cylinder (9), in a section that is distant from the piston rod, a bolt element (18) for engagement into at least one breach (19a) of the shell component (12), in a manner such that upon the engagement of the bolt element (18) into the breach (19a), an axial shifting of the cylinder (9) and the shell component (12) is essentially blocked; wherein furthermore the bolt element (18) is prestressed in an essentially radial direction, away from the shaft and towards a bolting position, in a manner such that upon adjustment of the bolt element (18) in radial alignment with the breach (19a), the bolt element (18) necessarily enters into its bolting position, hence into the breach (19a); and wherein there are provided, on the radially outer end of the bolt element (18), an unbolting surface (40) accessible to the action of radial force, in particular the action of fingers, which unbolting surface (40) permits that the bolt element (18) be moved in a radially inward direction, in a manner such that a blocking of the axial shift between the cylinder (9) and the shell component (12) is released and that, after an axial shifting is initiated, a sliding surface (40) of the bolt element (18) reach a sliding engagement with a slideway (27a) of the shell component (12),
**characterized in that**
the magnitude of the radial path of the bolt element (18), which path is necessary to release the blockage and is to be caused by the external effect of radial force upon the unbolting surface (40), differ as a function of the relative-shift direction of a subsequent deliberate axial shift, between the cylinder (9) and the shell component (12); wherein a lesser radial path corresponds to a first relative-shift direction, with a lower risk potential, and a greater radial path corresponds to a second relative-shift direction, with a higher risk potential.

2. Telescopic positioning device to be mounted between two structural components of a superordinate mechanical structure, having an shaft (A), a pneumatic spring (11), and a shell component (12) which is shiftable on the cylinder (9) of the pneumatic spring (11) in the axial direction (A); wherein the shell component (12) possesses a push-out end (34); wherein a connecting element (15) is fixed to the shell component (12), in order to connect with a structural component of the superordinate mechanical structure; wherein a piston rod (13) of the pneumatic spring is led out of the push-out end (12a) of the shell component (12); and wherein a further connecting element (14) is fixed to the outer end-region of the piston rod (13), for connection to a further structural component of the superordinate mechanical structure; wherein furthermore there is provided, on the cylinder (9), in a section that is distant from the piston rod, a bolt element (18) for engagement into at least one breach (19a) of the shell component (12), in a manner such that upon the engagement of the bolt element (18) into the breach (19a), an axial shifting of the cylinder (9) and the shell component (12) is essentially blocked; wherein furthermore the bolt element (18) is prestressed in an essentially radial direction, away from the shaft (A) and towards a bolting position, so that upon adjustment of the bolt element (18) in radial alignment with the breach (19a), the bolt element (18) necessarily enters into its bolting position, hence into the breach (19); and wherein there are provided, on the radially outer end of the bolt element (18), an unbolting surface (40) accessible to the action of radial force, in particular the action of fingers, which unbolting surface (40) permits that the bolt element (18) be moved in a radially inward direction, in a manner such that a blocking of the axial shift between the cylinder (9) and the shell component (12) is released and that, after an axial shifting is initiated, a sliding surface (40) of the bolt element (18) reach a sliding engagement with a slideway (27a) of the shell component (12),
**characterized in that**
in the vicinity of the breaches (19a, 19), on the outer side of the shell component (12) there are provided stop surfaces (44, 51) for a release body that acts upon the unbolting surface (40) in an essentially radial direction, in particular a finger; which stop surfaces possess different radial distances from the shaft (A), for different breaches (19a, 19), if desired, in connection with the embodiment according to Claim 1.

3. Telescopic positioning device to be mounted between two structural components of a superordinate mechanical structure, having an shaft (A), a pneumatic spring (11), and a shell component (12) which is shiftable on the cylinder (9) of the pneumatic spring (11) in the axial direction (A); wherein the shell component (12) possesses a push-out end (34); wherein a connecting element (15) is fixed to the shell component (12), in order to connect with a structural component of the superordinate mechanical structure; wherein a piston rod (13) of the pneumatic spring is led out of the push-out end (12a) of the shell component (12); and wherein a further connecting element (14) is fixed to the outer end-region of the piston rod (13), for connection to a further structural component of the superordinate mechanical structure; wherein furthermore there is provided, on the cylinder (9), in a section that is distant from the piston rod, a bolt element (18) for engagement into at least one breach (19a) of the shell component (12), in a manner such that upon the engagement of the bolt element (18) into the breach (19a), an axial shifting of the cylinder (9) and the shell component (12) is essentially blocked; wherein furthermore the bolt element (18) is prestressed in an essentially radial direction, away from the shaft (A) and towards a bolting position, in a manner such that upon adjustment of the bolt element (18) in radial alignment with the breach (19a), the bolt element (18) necessarily enters into its bolting position, hence into the breach (19); and wherein there are provided, on the radially outer end of the bolt element (18), an unbolting surface (40) accessible to the action of radial force, in particular the action of fingers, which unbolting surface (40) permits that the bolt element (18) be moved in a radially inward direction, in a manner such that a blocking of the axial shift between the cylinder (9) and the shell component (12) is released and that, after an axial shifting is initiated, a sliding surface (40) of the bolt element (18) reach a sliding engagement with a slideway (27a) of the shell component (12),
**characterized in that**
the bolt element (18) possesses an axial play in its bolting position, with respect to the breach (19a), and that a radially inward motion of the bolt element (18) is blocked, whenever this axial play is used up at least partially by the axial shift in a relative-shift direction, if desired, in connection with the embodiment according to Claims 1 or 2.

4. Telescopic positioning device according to one of the Claims 1-3,
**characterized in that**
the radial movement of the bolt element (18), under the action of an external radial force, along a residual path (H-h) which is equivalent to the difference between the longer radial path (H) and the shorter radial path (h), is made more difficult.

5. Telescopic positioning device according to Claim 4,
**characterized in that**
the radial movement along the residual path (H-h) is made more difficult by the progression of the resilient force of a spring-loading device (22) that acts on the bolt element 18.

6. Telescopic positioning device according to one of the Claims 4 or 5,
**characterized in that**
in the vicinity of the breach (19a) on the outside of the shell component (12), a stop surface (44) for a substantially radially-acting release element acting on the releasing surface (40), in particular a finger, is provided, which surface permits a shorter radial path (h) required for the subsequent axial shifting of cylinder (9) and shell component (12) in the first relative-shift direction, but makes more difficult a longer radial path (H) required for the subsequent axial shifting of cylinder (9) and shell component (12) in the second relative-shift direction.

7. Telescopic positioning device according to one of the Claims 1-6,
**characterized in that**
the differentiation of the required radial path (H,h) of bolt element (18) for the subsequent axial shifting in different relative-shift directions is caused by the provision on the bolt element (18) of jointly-acting camming (41f, 46), facing each other in a radial direction, and of a breach margin (42); which cause, at the beginning of an axial shift in at least one relative-shift direction, an additional radial movement of the bolt element (18) radially inward, beyond a position reached by the action of an external radial force on the bolt-releasing surface (40).

8. Telescopic positioning device according to Claim 7,
**characterized in that**
the camming (41f, 46) is only provided in an axial end-region of the bolt element (18) and in the pertinent axial end-region (49) of the breach margin (42).

9. Telescopic positioning device according to one of the Claims 7 and 8,
**characterized in that**
the camming on the bolt element side (41f) is produced by a profiling of the axially-running crest line (41) of the bolt-releasing surface (40), and in that camming on the breach-margin side (46) is produced on a radially inner end-region of the breach margin (42).

10. Telescopic positioning device according to Claim 9,
**characterized in that**
the axially-running crest line (41) features a section (41a) that is substantially parallel to the axis, which section merges at one end into a substantially radial stop flank (41b), for the purpose of joint action with an axial end-region (43) of the breach margin (42), and at the other end merges into a flank (41f) that is inclined at an acute angle towards the axis (A), for the purpose of a camlike joint action with an opposing axial end-region (46) of the breach margin (42), the sliding surface being formed in the region of the section (41a) that is parallel to the axis.

11. Telescopic positioning device according to one of the Claims 3-10,
**characterized in that**
the radially inward movement of the bolt element (18) is lockable by locking surfaces (48a, 47a) on the bolt element (18) and on the breach margin (42).

12. Telescopic positioning device according to Claim 11,
**characterized in that**
a locking surface (48a) on the bolt-element side is formed by an undercut (48) of the bolt element (18), which undercut is located radially inward from the bolt-release surface (40); and a locking surface (47a) on the breach-margin side is formed by a locking projection (47) of the breach margin (42), which projection protrudes in an axial direction into the breach (19a).

13. Telescopic positioning device according to one of the Claims 1-12,
**characterized in that**
at least two axially distanced breaches (19a, 19) are available in the shell component (12); a shorter radial path (h) of the bolt element (18) (caused by the action of an external force) being required when the bolt element (18) engages into a first breach (19a) for the subsequent execution of an axial shift in the first relative-shift direction, which shift draws the bolt element (18) closer to the second breach (19) ; furthermore a longer radial path of the bolt element (18), caused by the action of an external force, being required when the bolt element (18) engages in this first breach (19a) for the subsequent axial shift in the second relative-shift direction; furthermore a longer radial path (H) of the bolt element (18) (caused by the action of an external force) being required when the bolt element (18) engages in the second breach (19) for the subsequent axial shift in the second relative-shift direction; and the radial movement of the bolt element (18) (caused by the action of an external force), along a residual path (H-h) that is equivalent to the difference between a shorter radial path (h) and a longer radial path (H), being made difficult to a lesser degree when the bolt element (18) engages in the second breach (19) than when the bolt element (18) engages in the first breach (19a).

14. Telescopic positioning device according to Claim 13,
**characterized in that**
when the bolt element (18) engages in the first breach (19a), the radially inward movement of the bolt element (18) is locked whenever an axial clearance which exists between the bolt element (18) and the first breach (19a) is used up by axial shifting in the first relative-shift direction.

15. Telescopic positioning device according to Claim 13 or 14,
**characterized in that**
the cylinder (9) in the shortening position lies adjacent to a bottom (12a) of the shell component (12) and preferably contacts it.

16. Telescopic positioning device according to one of the Claims 1-15,
**characterized in that**
the cylinder is guided in an untwistable manner with respect to the shell component (12) by means of a linear guideway (27) on the shell component (12) and of a way-follower element (29) which engages in said linear guideway.

17. Telescopic positioning device according to Claim 16,
**characterized in that**
the follower element (129) and the linear guideway (127) are angularly offset in the peripheral direction around the shaft (A), by preferably 180°, in relation to the bolt element (118) and to the at-least-one breach (119a).

18. Telescopic positioning device according to Claim 17,
**characterized in that**
the linear guideway (127) is made up of a slot (127) that is open radially inward and closed radially outward and is open at at least one axial end (34) of the shell component (112); and in that the way-follower element (129) is made up of a rotational-security cam (129) that engages in the slot (127).

19. Telescopic positioning device according to one of the Claims 16-18,
**characterized in that**
the bolt element (18) is contained by a bolt housing (16) that is manufactured separately from the cylinder; and in that the way-follower element (29) is attached to this bolt housing (16).

20. Telescopic positioning device according to one of the Claims 18 and 19,
**characterized in that**
the slot (127) is made up of an axially-running rib (127d) which projects radially outward from the outside of the shell component (112).

21. Application of a telescopic positioning device according to one of the Claims 1-20 for positioning an automotive-body component, pivotable around a horizontal axis of an automotive vehicle, on a chassis of said automotive vehicle, the automotive-body component being subject to a force-of-gravity moment and said gravity moment stressing the positioning device in the direction of a shortening of its effective length.

## Revendications

1. Dispositif de positionnement télescopique à monter entre deux éléments de construction d'une construction d'ordre supérieur comportant un axe (A), un ressort pneumatique (11) et une enveloppe (12) pouvant coulisser dans la direction axiale (A), sur le cylindre du ressort pneumatique (11),
l'enveloppe (12) possèdant une extrémité d'extraction (34), sur l'enveloppe (12) étant placé un élément de liaison (15) pour la liaison avec un élément de construction de la construction d'ordre supérieur, une tige de piston (13) du ressort pneumatique (11) ressortant de l'extrémité d'extraction (12a) de l'enveloppe (12) et, sur la zone d'extrémité extérieure de la tige de piston (13), un autre élément de liaison (14) étant placé pour la liaison avec un autre élément de construction de la construction d'ordre supérieur,
en outre, sur le cylindre (9), dans une portion éloignée de la tige de piston, un élément formant verrou (18) étant prévu l'engagement dans au moins un ajour (19a) de l'enveloppe (12), de sorte qu'en cas d'engagement de l'élément formant verrou (18) dans l'ajour (19a), un coulissement axial du cylindre (9) et de l'enveloppe (12) est sensiblement bloqué, en outre l'élément formant verrou (18) étant précontraint sensiblement radialement, à partir de l'axe (A), en direction d'une position de verrouillage, de sorte que lorsque l'élément formant verrou (18) est réglé radialement aligné avec l'ajour (19a), l'élément formant verrou (18) pénètre par force dans sa position de verrouillage et donc dans l'ajour (19), et
à l'extrémité radialement extérieure de l'élément formant verrou (18), une surface de déverrouillage (40) accessible pour l'action d'une force radiale extérieure, en particulier l'action d'un doigt étant prévue, laquelle surface autorise un déplacement de l'élément formant verrou (18) radialement vers l'intérieur, de sorte qu'un blocage du coulissement axial entre le cylindre (9) et l'enveloppe (12) est supprimé et qu'une surface de glissement (40) de l'élément formant verrou (18) parvient, après introduction d'un coulissement axial, en engagement par glissement avec une voie de glissement (27a) de l'enveloppe (12),
caractérisé
en ce que la grandeur de la course radiale (H, h) de l'élément formant verrou (18), nécessaire pour la suppression du blocage, à provoquer par l'action extérieure d'une force radiale sur la surface de déverrouillage (40), est différente en fonction du sens de coulissement relatif d'un coulissement axial, envisagé pour la suite, entre le cylindre (9) et l'enveloppe (12), à un premier sens de coulissement relatif avec potentiel de risque réduit correspondant une plus petite course radiale (h) et à un second sens de coulissement relatif avec potentiel de risque plus grand, correspondant une course radiale (H) plus grande.

2. Dispositif de positionnement télescopique à monter entre deux éléments de construction d'une construction d'ordre supérieur comportant un axe (A), un ressort pneumatique (11) et une enveloppe (12) pouvant coulisser dans la direction axiale (A), sur le cylindre du ressort pneumatique (11),
l'enveloppe (12) possédant une extrémité d'extraction (34), sur l'enveloppe (12) étant placé un élément de liaison (15) pour la liaison avec un élément de construction de la construction d'ordre supérieur, une tige de piston (13) du ressort pneumatique (11) ressortant de l'extrémité d'extraction (12a) de l'enveloppe (12) et, sur la zone d'extrémité extérieure de la tige de piston (13), un autre élément de liaison (14) étant placé pour la liaison avec un autre élément de construction de la construction d'ordre supérieur,
en outre, sur le cylindre (9), dans une portion éloignée de la tige de piston, un élément formant verrou (18) étant prévu pour l'engagement dans au moins un ajour (19a) de l'enveloppe (12), de sorte qu'en cas d'engagement de l'élément formant verrou (18) dans l'ajour (19a), un coulissement axial du cylindre (9) et de l'enveloppe (12) est sensiblement bloqué, en outre l'élément formant verrou (18) est précontraint sensiblement radialement, à partir de l'axe (A), en direction d'une position de verrouillage, de sorte que lorsque l'élément formant verrou (18) est réglé radialement aligné avec l'ajour (19a), l'élément formant verrou (18) pénètre par force dans sa position de verrouillage et donc dans l'ajour (19), et
à l'extrémité radialement extérieure de l'élément formant verrou (18), une surface de déverrouillage (40) accessible pour l'action d'une force radiale extérieure, en particulier l'action d'un doigt étant prévue, laquelle surface autorise un déplacement de l'élément formant verrou (18) radialement vers l'intérieur, de sorte qu'un blocage du coulissement axial entre le cylindre (9) et l'enveloppe (12) est supprimé et qu'une surface de glissement (40) de l'élément formant verrou (18) parvient, après introduction d'un coulissement axial, en engagement par glissement avec une voie de glissement (27a) de l'enveloppe (12),
caractérisé
en ce que dans la zone environnante à des ajours (19a, 19), sont prévus, sur le côté extérieur de l'enveloppe (12), des surfaces de butée (44, 51) pour un organe de déverrouillage, en particulier un doigt, agissant sensiblement radialement sur la surface de déverrouillage (40), qui possèdent une distance radiale différente, par rapport à l'axe (A), pour différents ajours (19a, 19), si on le souhaite, en liaison avec la réalisation selon la revendication 1.

3. Dispositif de positionnement télescopique à monter entre deux éléments de construction d'une construction d'ordre supérieur comportant un axe (A), un ressort pneumatique (11) et une enveloppe (12) pouvant coulisser dans la direction axiale (A), sur le cylindre du ressort pneumatique (11),
l'enveloppe (12) possédant une extrémité d'extraction (34), sur l'enveloppe (12) étant placé un élément de liaison (15) pour la liaison avec un élément de construction de la construction d'ordre supérieur, une tige de piston (13) du ressort pneumatique (11) ressortant de l'extrémité d'extraction (12a) de l'enveloppe (12) et, sur la zone d'extrémité extérieure de la tige de piston (13), un autre élément de liaison (14) étant placé pour la liaison avec un autre élément de construction de la construction d'ordre supérieur,
en outre, sur le cylindre (9), dans une portion éloignée de la tige de piston, un élément formant verrou (18) étant prévu pour l'engagement dans au moins un ajour (19a) de l'enveloppe (12), de sorte qu'en cas d'engagement de l'élément formant verrou (18) dans l'ajour (19a), un coulissement axial du cylindre (9) et de l'enveloppe (12) est sensiblement bloqué, en outre l'élément formant verrou (18) étant précontraint sensiblement radialement, à partir de l'axe (A), en direction d'une position de verrouillage, de sorte que lorsque l'élément formant verrou (18) est réglé radialement aligné avec l'ajour (19a), l'élément formant verrou (18) pénètre par force dans sa position de verrouillage et donc dans l'ajour (19), et
à l'extrémité radialement extérieure de l'élément formant verrou (18), une surface de déverrouillage (40) accessible pour l'action d'une force radiale extérieure, en particulier l'action d'un doigt étant prévue, laquelle surface autorise un déplacement de l'élément formant verrou (18) radialement vers l'intérieur, de sorte qu'un blocage du coulissement axial entre le cylindre (9) et l'enveloppe (12) est supprimé et qu'une surface de glissement (40) de l'élément formant verrou (18) parvient, après introduction d'un coulissement axial, en engagement par glissement avec une voie de glissement (27a) de l'enveloppe (12),
caractérisé
en ce que l'élément formant verrou (18) possède, dans sa position de verrouillage, un jeu axial par rapport à l'ajour (19a) et en ce qu'un déplacement radial vers l'intérieur de l'élément formant verrou (18) est bloqué lorsque ce jeu axial est au moins en partie épuisé par coulissement axial dans un sens de coulissement relatif, si on le souhaite en liaison avec la réalisation selon la revendication 1 ou 2.

4. Dispositif de positionnement télescopique selon l'une des revendications 1 à 3,
caractérisé
en ce que le déplacement radial de l'élément formant verrou (18) est rendu plus difficile par l'action extérieure d'une force radiale le long d'une course résiduelle (H-h) correspondant à la différence (H-h) entre la plus grande course radiale (H) et la plus petite course radiale (h).

5. Dispositif de positionnement télescopique selon la revendication 4,
caractérisé
en ce que le déplacement radial le long de la course résiduelle (H-h) est rendu plus difficile par progression de la force élastique d'un dispositif de précontrainte (22), agissant sur l'élément formant verrou (18).

6. Dispositif de positionnement télescopique selon la revendication 4 ou 5,
caractérisé
en ce que dans la zone environnante à l'ajour (19a) il est prévu, sur le côté extérieur de l'enveloppe (12), une surface de butée (44) pour un organe de déverrouillage, en particulier un doigt, agissant sensiblement radialement sur la surface de déverrouillage (40), qui autorise une plus petite course radiale (h) de l'élément formant verrou (18), nécessaire pour le coulissement axial suivant du cylindre (9) et de l'enveloppe (12) dans le premier sens de coulissement relatif, mais rend plus difficile une plus grande course radiale (H) de l'élément formant verrou, nécessaire pour le coulissement axial suivant du cylindre (9) et de l'enveloppe (12), dans le second sens de coulissement relatif.

7. Dispositif de positionnement télescopique selon l'une des revendications 1 à 6,
caractérisé
en ce que le caractère différent de la course radiale (H, h) nécessaire de l'élément formant verrou (18), pour le coulissement axial suivant dans différents sens de coulissement relatif, est causé par la réalisation de moyens à came (41f, 46) coopérants, se faisant face les uns les autres dans la direction axiale, sur l'élément formant verrou (18) et un bord d'ajour (42), qui, au début d'un coulissement axial dans au moins un sens de coulissement relatif, provoquent un déplacement radial supplémentaire de l'élément formant verrou (18), radialement vers l'intérieur, au-delà d'une position atteinte par l'action extérieure d'une force radiale sur la surface de déverrouillage (40).

8. Dispositif de positionnement télescopique selon la revendication 7,
caractérisé
en ce que des moyens à came (41f, 46) ne sont prévus que dans une zone d'extrémité axiale de l'élément formant verrou (18) et dans la zone d'extrémité axiale (49) correspondante du bord d'ajour (42).

9. Dispositif de positionnement télescopique selon l'une des revendications 7 et 8,
caractérisé
en ce que des moyens à came (41f), du côté de l'élément formant verrou, sont formés par profilage d'une ligne de sommet (41), s'étendant dans la direction axiale, de la surface de déverrouillage (40) et en ce que des moyens à came (46), situés du côté du bord de l'ajour, sont formés sur une zone d'extrémité, radialement intérieure, du bord d'ajour (42).

10. Dispositif de positionnement télescopique selon la revendication 9,
caractérisé
en ce que la ligne de sommet (41), s'étendant dans la direction axiale, présente une portion (41a) sensiblement parallèle à l'axe, qui à une extrémité se prolonge par un flanc de butée (41b), sensiblement radial, en vue de la coopération avec une zone d'extrémité (43) axiale du bord d'ajour (42) et, à l'autre extrémité, se prolonge par un flanc (41f), incliné de manière à former un angle aigu avec l'axe (A), en vue de la coopération du type came avec une zone d'extrémité (46) axiale opposée du bord d'ajour (42), la surface de glissement étant formée dans la zone de la portion (41a) parallèle à l'axe.

11. Dispositif de positionnement télescopique selon l'une des revendications 3 à 10,
caractérisé
en ce que le déplacement radial vers l'intérieur de l'élément formant verrou (18) peut être bloqué par des surfaces de blocage (48a, 47a), sur l'élément formant verrou (18) et sur le bord d'ajour (42).

12. Dispositif de positionnement télescopique selon la revendication 11,
caractérisé
en ce qu'une surface de blocage (48a) côté élément formant verrou, est formée par un détalonnage (48), situé radialement vers l'intérieur de la surface de déverrouillage (40), de l'élément formant verrou (18), et une surface de blocage (47a) côté bord d'ajour, est formée par une saillie de blocage (47), pénétrant axialement dans l'ajour (19a), du bord d'ajour (42).

13. Dispositif de positionnement télescopique selon l'une des revendications 1 à 12,
caractérisé
en ce qu'au moins deux ajours (19a, 19), espacés axialement, sont prévus dans l'enveloppe (12), et, en cas d'engagement de l'élément formant verrou (18) dans un premier ajour (19a) - correspondant à une plus grande longueur du dispositif de positionnement - en vue de la réalisation suivante d'un coulissement axial dans un premier sens de coulissement relatif, qui rapproche l'élément formant verrou (18) du second ajour (19) - correspondant à une longueur plus courte du dispositif de positionnement -, une plus petite course radiale (h) de l'élément formant verrou (18) par action extérieure d'une force radiale est nécessaire, et en outre, en cas d'engagement de l'élément formant verrou (18) dans ce premier ajour (19a), en vue du coulissement axial suivant dans le deuxième sens de coulissement relatif, une plus grande course radiale de l'élément formant verrou (18) par action extérieure d'une force radiale est nécessaire, et en outre, en cas d'engagement de l'élément formant verrou (18) dans le second ajour (19), en vue du coulissement axial suivant dans le deuxième sens de coulissement relatif, une plus grande course radiale (H) de l'élément formant verrou (18) par action extérieure d'une force radiale, est nécessaire, et le déplacement radial de l'élément formant verrou (18) par action extérieure d'une force radiale le long d'une course résiduelle (H-h), correspondant à la différence (H-h) entre une plus petite course radiale (h) et une plus grande course radiale (H), est rendu moins difficile, en cas d'engagement de l'élément formant verrou (18) dans le second ajour (19), qu'en cas d'engagement de l'élément formant verrou (18) dans le premier ajour (19a).

14. Dispositif de positionnement télescopique selon la revendication 13,
caractérisé
en ce qu'en cas d'engagement de l'élément formant verrou (18) dans le premier ajour (19a), le déplacement radial vers l'intérieur de l'élément formant verrou (18) est bloqué, lorsqu'un jeu axial, existant entre l'élément formant verrou (18) et le premier ajour (19a), est épuisé par coulissement axial dans le premier sens de coulissement relatif.

15. Dispositif de positionnement télescopique selon la revendication 13 ou 14,
caractérisé
en ce que le cylindre (9), dans la position correspondant à la longueur réduite, se trouve à proximité d'un fond (12a) de l'enveloppe (12) et bute de préférence contre celui-ci.

16. Dispositif de positionnement télescopique selon l'une des revendications 1 à 15,
caractérisé
en ce que le cylindre (9) est guidé, de manière à ne pouvoir tourner par rapport à l'enveloppe (12), par une voie de guidage linéaire (27), s'étendant dans la direction axiale, sur l'enveloppe (12) et par un élément suiveur de voie (29), s'engageant dans cette voie de guidage linéaire.

17. Dispositif de positionnement télescopique selon la revendication 16,
caractérisé
en ce que l'élément suiveur de voie (129) et la voie de guidage linéaire (127) sont décalés angulairement dans la direction périphérique, autour de l'axe (A), de préférence de 180°, par rapport à l'élément formant verrou (118) et par rapport à au moins un ajour (119a).

18. Dispositif de positionnement télescopique selon la revendication 17,
caractérisé
en ce que la voie de guidage linéaire (127) est formée par une rainure (127) ouverte radialement vers l'intérieur et fermée radialement vers l'extérieur, qui est ouverte à au moins une extrémité axiale (34) de l'enveloppe (112) et en ce que l'élément suiveur de voie (129) est formé par une came de blocage de rotation (129), s'engageant dans la rainure (127).

19. Dispositif de positionnement télescopique selon l'une des revendications 16 à 18,
caractérisé
en ce que l'élément formant verrou (18) est formé sur un boîtier de verrou (16), réalisé séparément du cylindre, et en ce que l'élément suiveur de voie (29) est placé sur ce boîtier de verrou (16).

20. Dispositif de positionnement télescopique selon l'une des revendications 18 et 19,
caractérisé
en ce que la rainure (127) est formée dans une nervure (127d), s'étendant axialement, dépassant radialement vers l'extérieur du côté extérieur de l'enveloppe (112).

21. Utilisation d'un dispositif de positionnement télescopique selon l'une des revendications 1 à 20,
en vue du positionnement d'un élément de carrosserie, pouvant pivoter par rapport à un axe horizontal, d'un véhicule automobile sur un châssis de ce véhicule, l'élément de carrosserie étant soumis à un moment de force de gravité et ce moment de force de gravité sollicitant le dispositif de positionnement dans le sens d'un raccourcissement de sa longueur effective.
